# EUROPEAN PATENT SPECIFICATION

(11) **EP 4 535 103 B1**
(45) Date of publication and mention of the grant of the patent: **23.09.2026**
(21) Application number: 23811623.0
(22) Date of filing: 10.05.2023
(51) Int. Cl.: G05B 19/418, G06Q 50/04, G06Q 10/0631, G06Q 10/0639

(54) **SCHEDULING DEVICE, SCHEDULING METHOD, AND SCHEDULING PROGRAM**
PLANUNGSVORRICHTUNG, PLANUNGSVERFAHREN UND PLANUNGSPROGRAMM
DISPOSITIF DE PROGRAMMATION, PROCÉDÉ DE PROGRAMMATION ET PROGRAMME DE PROGRAMMATION

(30) Priority: 24.05.2022 JP 2022084347
(43) Date of publication of application: 09.04.2025
(73) Proprietor: Amada Co., Ltd., Isehara-shi, Kanagawa 259-1196 (JP)
(72) Inventor: KADOTANI, Goro, Isehara-shi, Kanagawa 259-1196 (JP)
(74) Representative: Grünecker Patent- und Rechtsanwälte PartG mbB
(86) International application number: PCT/JP2023/017592
(87) International publication number: WO 2023/228748

(56) References cited:
- WO-A1-2021/049299
- JP-A- 2000 237 938
- JP-A- 2003 162 313
- JP-A- 2005 190 063
- JP-A- 2009 217 397
- JP-A- 2019 215 732
- JP-A- 2019 219 713
- JP-A- 2020 160 638
- JP-A- 2021 131 605
- JP-A- H0 816 206
- JP-A- H0 926 997
- JP-A- H03 117 542
- JP-A- H1 086 044
- JP-A- H10 268 909
- JP-A- S61 214 956
- JP-B2- 4 724 292
- GUO B ET AL: "Rescheduling and optimization of schedules considering machine failures", INTERNATIONAL JOURNAL OF PRODUCTION ECONOMICS, ELSEVIER, AMSTERDAM, NL, vol. 60-61, 20 April 1999 (1999-04-20), pages 503 - 513, XP027393443, ISSN: 0925-5273, [retrieved on 19990420]

## Description

### Technical Field

The present invention relates to a scheduling device, a scheduling method, and a scheduling program.

### Background Art

Conventionally, there has been a scheduling system that supports work of planning a production process with the aid of a computer, the scheduling system including: a user interface unit including a tool having a function for displaying and editing a production plan using a Gantt chart; a planning unit that includes an automatic planning mechanism and a manual modification mechanism and has a function for creating and modifying a plan in response to a request from the user interface unit; a static information management unit that saves and manages information used by the automatic planning mechanism, such as plant information, line information that specifies a process as a way to produce a product, recipe information that specifies correspondence between raw materials and product materials, their processing times and the like, and job information that is the target of planning; and a display unit that displays a target plan and the like given via the user interface unit and on which input/output operations are performed, thereby making it possible to create a production plan corresponding to a product produced in a variety of processes (e.g., Patent Literature 1). "Rescheduling and optimization of schedules considering machine failures" by GUO B et al published in INTERNATIONAL JOURNAL OF PRODUCTION ECONOMICS, ELSEVIER, AMSTERDAM, NL, vol. 60-61, 20 April 1999, pages 503-513, ISSN: 0925-5273 is a further prior art and relates to rescheduling of schedules of jobs in view of machine failures.

The conventional scheduling system generates an initial plan using the automatic planning mechanism, and displays it on the display unit through the user interface unit as a target plan. Modifications are made to the target plan using the manual modification mechanism based on instructions from the user interface unit. This planning unit performs planning by alternately using the automatic planning mechanism and the manual modification mechanism.

### Citation List

### Patent Literature

Patent Literature 1: Japanese Patent Application Laid-Open Publication No. 8-30686

### Summary

### Technical Problem

However, in the conventional scheduling system, the production plan needs to be manually modified as described above, but manual modification is extremely difficult for the following reasons. First, when the production plan is modified for each manufacturing process, the number of items to be considered when a relatively long-term (e.g., one-week) modification is made is enormous, and the number of processes associated with it is much larger, so that the number of man-hours for modification work increases and a high level of skill is also required of a person in charge.

Further, when the schedule is modified for each product, the lead time differs for each process, so, for example, if a certain product is advanced in order to equalize the load amount in the blanking process, problems arise such as an increase in the load amount in the bending process. Furthermore, production plans can change constantly due to changes in delivery dates or unexpected orders, and processing resources also change due to defects in processing machines, vacations of persons in charge of manual processes, or the like, which makes it difficult to make modifications manually.

An aspect of the present invention includes a scheduling device, a scheduling method, and a scheduling program that can automatically modify a created schedule.

### Solution to Problem

A scheduling device according to an aspect of the present invention is configured to be able to execute: a production schedule acquisition process of acquiring a production schedule for each of one or more manufacturing processes in which a plurality of pieces of production plan information for a product including one or more parts are arranged; and a reorganization process of reorganizing the production schedule acquired for each of the one or more manufacturing processes, wherein the reorganization process includes: an available work time determination process of determining whether there is an available work time in the production schedule; a production plan information identification process of, when there is the available work time, identifying the production plan information that can be rearranged to the available work time from among the plurality of pieces of production plan information arranged in the production schedule; and a rearrangement process of rearranging the identified production plan information, and the production plan information includes a process lead time for each of the one or more manufacturing processes of the product and a scheduled work date and a work completion date for each of the one or more manufacturing processes of the product.

A scheduling method according to an aspect of the present invention includes: acquiring a production schedule for each of one or more manufacturing processes in which a plurality of pieces of production plan information for a product including one or more parts are arranged; and reorganizing the production schedule acquired for each of the one or more manufacturing processes, wherein the reorganizing includes: determining whether there is an available work time in the production schedule; identifying, when there is the available work time, the production plan information that can be rearranged to the available work time from among the plurality of pieces of production plan information arranged in the production schedule; and rearranging the identified production plan information, and the production plan information includes a process lead time for each of the one or more manufacturing processes of the product and a scheduled work date and a work completion date for each of the one or more manufacturing processes of the product.

A scheduling program according to an aspect of the present invention is configured to cause a scheduling device to execute: a production schedule acquisition process of acquiring a production schedule for each of one or more manufacturing processes in which a plurality of pieces of production plan information for a product including one or more parts are arranged; and a reorganization process of reorganizing the production schedule acquired for each of the one or more manufacturing processes, wherein the reorganization process includes: an available work time determination process of determining whether there is an available work time in the production schedule; a production plan information identification process of, when there is the available work time, identifying the production plan information that can be rearranged to the available work time from among the plurality of pieces of production plan information arranged in the production schedule; and a rearrangement process of rearranging the identified production plan information, and the production plan information includes a process lead time for each of the one or more manufacturing processes of the product and a scheduled work date and a work completion date for each of the one or more manufacturing processes of the product.

According to the scheduling device, the scheduling method, and the scheduling program according to an aspect of the present invention, production plan information that fits an available work time in a production schedule is identified and rearranged, so that the created schedule can be automatically modified.

### Advantageous Effects of Invention

According to the scheduling device, the scheduling method, and the scheduling program according to an aspect of the present invention, a created schedule can be automatically modified.

### Brief Description of Drawings

[Figure 1] Figure 1 is a schematic diagram showing a scheduling system according to an embodiment of the present invention.
[Figure 2] Figure 2 is a functional block diagram showing a scheduling device in this embodiment.
[Figure 3] Figure 3 is a diagram showing an example of a production schedule screen in this embodiment.
[Figure 4] Figure 4 is a diagram showing an example of a production schedule screen after a reorganization process in this embodiment.
[Figure 5] Figure 5 is a flowchart showing an example of a process executed by a production schedule creation unit in this embodiment.
[Figure 6] Figure 6 is a flowchart showing an example of a process executed by a production schedule modification unit in this embodiment.
[Figure 7] Figure 7 is a flowchart showing an example of a production plan information identification process in this embodiment.
[Figure 8] Figure 8 is a diagram showing an example of reorganization of a production schedule including production plan information that can be advanced in this embodiment.
[Figure 9] Figure 9 is a diagram showing an example of reorganization of a production schedule including production plan information that can be advanced in this embodiment.
[Figure 10] Figure 10 is a diagram showing a variant of reorganization of a production schedule including production plan information that can be advanced in this embodiment.
[Figure 11] Figure 11 is a diagram showing a variant of reorganization of a production schedule including production plan information that can be advanced in this embodiment.
[Figure 12] Figure 12 is a diagram showing an example of reorganization of a production schedule including excessive production plan information in this embodiment.
[Figure 13] Figure 13 is a diagram showing an example of reorganization of a production schedule including excessive production plan information in this embodiment.
[Figure 14] Figure 14 is a diagram showing an example of reorganization of a production schedule including delayed production plan information in this embodiment.
[Figure 15] Figure 15 is a diagram showing an example of reorganization of a production schedule including delayed production plan information in this embodiment.
[Figure 16] Figure 16 is a diagram showing an example of reorganization of a production schedule in consideration of grouping of production plan information in this embodiment.
[Figure 17] Figure 17 is a diagram showing an example of reorganization of a production schedule in consideration of grouping of production plan information in this embodiment.
[Figure 18] Figure 18 is a diagram showing an example of reorganization of a production schedule in consideration of grouping of production plan information in this embodiment.
[Figure 19] Figure 19 is a diagram showing an example of reorganization of a production schedule in consideration of grouping of production plan information in this embodiment.
[Figure 20] Figure 20 is a diagram showing an example of reorganization of a production schedule when a defect in a processing machine is acquired in this embodiment.
[Figure 21] Figure 21 is a diagram showing an example of reorganization of a production schedule when a defect in a processing machine is acquired in this embodiment.
[Figure 22] Figure 22 is a diagram showing an example of reorganization of a production schedule in consideration of attendance information in this embodiment.
[Figure 23] Figure 23 is a diagram showing an example of reorganization of a production schedule in consideration of attendance information in this embodiment.
[Figure 24] Figure 24 is a diagram showing an example of reorganizing a production schedule by dividing production plan information in this embodiment.
[Figure 25] Figure 25 is a diagram showing an example of reorganizing a production schedule by dividing production plan information in this embodiment.
[Figure 26] Figure 26 is a flowchart showing an example of a scheduling method in this embodiment.

### Description of Embodiment

Hereinafter, the best embodiment for embodying the present invention will be described with reference to the drawings. Note that the following embodiment do not limit the invention related to each claim, and all of the combinations of features described in the embodiment are not necessarily essential to the solution of the invention.

### [Overall Configuration of Scheduling System According to This Embodiment]

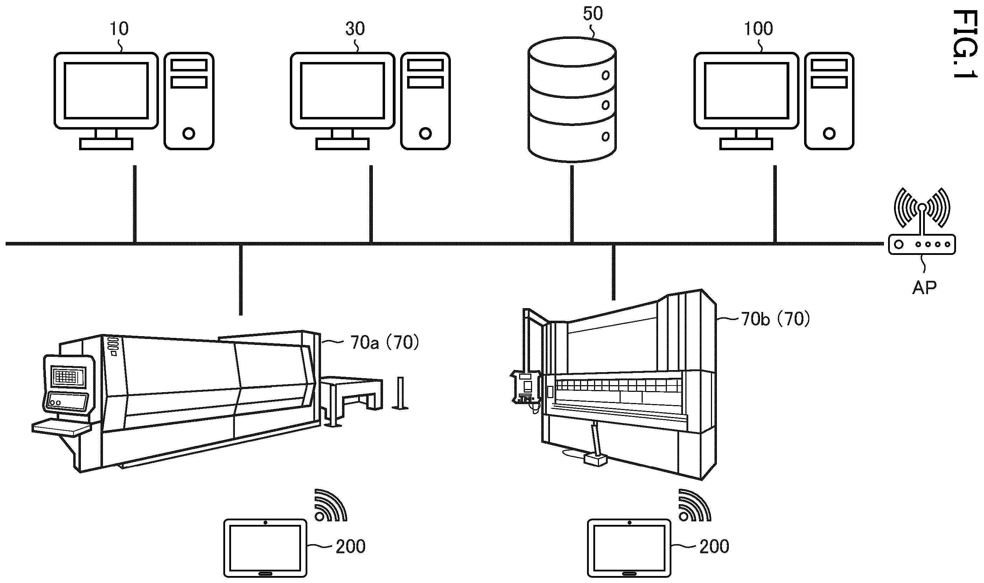

Figure 1 is a schematic diagram showing a scheduling system according to an embodiment of the present invention.

First, a scheduling system according to an embodiment of the present invention will be outlined with reference to Figure 1. A scheduling system 1 according to this embodiment is a scheduling system that manages a production schedule PS for a series of manufacturing processes for a product including one or more parts. The scheduling system 1 generally includes a scheduling device 100 as shown in Figure 1.

The manufacturing processes of a product include processes until the completion of the product, such as a blanking process of performing blanking in which one sheet metal with a fixed size (hereinafter referred to as a sheet in this embodiment) is cut out into any shape, a sorting process of sorting works in process on the sheet after the blanking process, a secondary process, an assembly process, and an inspection process. The secondary process includes, for example, bending, painting, and deburring. The assembly process includes, for example, welding and screwing.

Further, the scheduling system 1 includes a production management device 10 functioning as a production management unit, a design aided device 30 functioning as a design aided unit, a server 50, a processing machine 70, and a workplace terminal 200. The production management device 10, the design aided device 30, the server 50, the processing machine 70, the scheduling device 100, and the workplace terminal 200 are connected to each other so as to be able to communicate with each other via a private network such as a local network or an intranet. When they are connected via wireless communication, the scheduling system 1 may further include one or more access points AP.

The production management device 10 is an electronic computer such as a desktop personal computer, a laptop computer, or a tablet terminal. The production management device 10 performs to manage order information, product information, manufacturing process information on products and parts, and progress information for each process, and to arrange for the production of ordered products. Further, the production management device 10 is configured to create and manage production plan information 12 on products. Furthermore, the production management device 10 is configured to, when making arrangements for the production of a product, create production arrangement information related to the product. The production management device 10 stores the created production plan information 12 and production arrangement information in a production technology management database of the server 50 described later.

The production plan information 12 includes a process lead time for each manufacturing process of a product, and a scheduled work date and time and a work completion date for each manufacturing process of the product. Further, the production plan information 12 includes the production delivery date of the product. Furthermore, the production plan information 12 includes attribute information. The attribute information includes, for example, the thickness of a material and the types of tools used in the bending process. Note that the attribute information may be included when the production management device 10 creates the production plan information 12, or the attribute information may be given by the design aided device 30 adding it to the production plan information 12 stored in the production technology management database.

The production arrangement information includes, for example, suppliers, information on products and parts, and part processing programs. The information on products and parts includes, for example, product names, part names, production delivery dates for products and parts, scheduled work dates for products and parts, manufacturing process information on products and parts, the quantities of products and parts, and serial numbers of products and parts.

The design aided device 30 is an electronic computer such as a desktop personal computer, a laptop computer, or a tablet terminal, and has CAD (computer-aided design)/CAM (computer-aided manufacturing) software. The design aided device 30 creates drawing data for parts and products, processing programs for the processing machine 70, and processing schedule information.

For example, when the processing machine 70 is a blanking machine 70a described later, the design aided device 30 is configured to select a part with the same thickness included in the production arrangement information based on the production arrangement information output from the production management device 10, perform nesting in which the processing program of that part is arranged without gaps, and create sheet data (a processing program). Then, the design aided device 30 creates processing schedule information regarding the nested sheet data. The processing schedule information includes the schedule creation date, the schedule name, the scheduled processing date, the scheduled processing machine, the sheet name, the list of parts included in the sheet, information on parts included in the sheet, and the like.

The design aided device 30 stores the created processing program and processing schedule information in the production technology management database of the server 50. Furthermore, the design aided device 30 is configured to be able to output a schedule instruction sheet of the created processing schedule information. In this embodiment, the processing schedule information may be a concept encompassing both a compilation of processing schedule information relating to a plurality of sheet data and processing schedule information relating to a single sheet data, or may be either one of them.

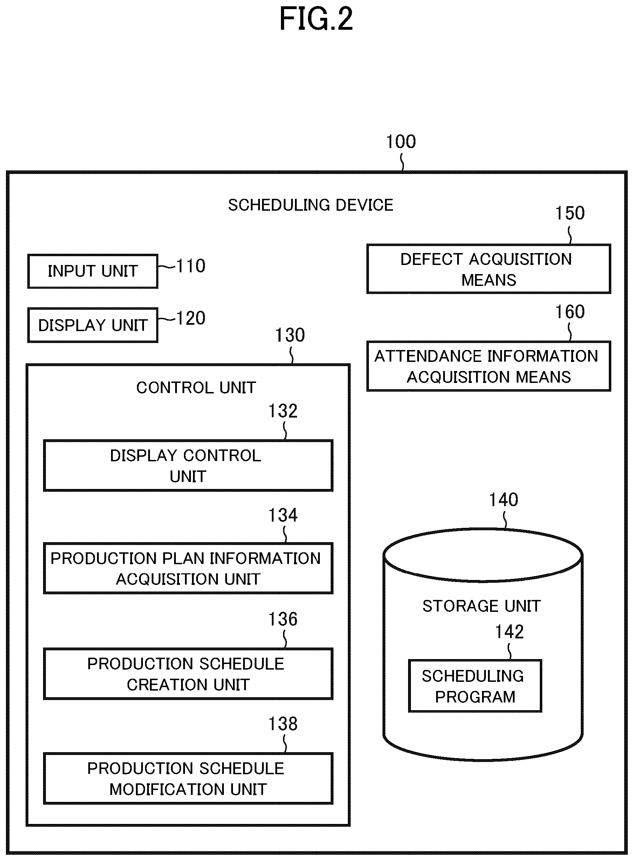

Figure 2 is a functional block diagram showing the scheduling device in this embodiment.

The scheduling device 100 is an electronic computer such as a desktop personal computer, a laptop computer, or a tablet terminal, and includes an input unit 110, a display unit 120, a control unit 130, and a storage unit 140 as shown in Figure 2**.** Further, the scheduling device 100 includes defect acquisition means 150 capable of acquiring a defect in a processing machine 70 used in a manufacturing process, and attendance information acquisition means 160 capable of acquiring attendance information of personnel in charge of each manufacturing process.

Furthermore, the scheduling device 100 is configured to be able to acquire a so-called manufacturing calendar, which includes the operating days of the entire factory and the operating dates and times of each manufacturing process. This embodiment will be described assuming that each manufacturing process has the same working hours (operating hours) per day, but without limitation to this, each manufacturing process may have different working hours.

The input unit 110 is composed of input devices such as a keyboard, a mouse, a touchpad, and a joystick, and in addition to the information input function normally required in the scheduling device 100, enables operations such as reorganization of the production schedule PS by operating the input unit 110. By having such a configuration, the scheduling device 100 makes it possible to manually reorganize the production schedule PS via the input unit 110.

The display unit 120 has a display as a display device, and in addition to the screen display function normally required in the scheduling device 100, displays, for example, a production schedule screen 122 described later. Further, the display unit 120 may be configured with a touch screen having the functions of the input unit 110. When the display unit 120 is configured with a touch panel, a user can input reorganization operations of the production schedule PS to the scheduling device 100 by operating the display unit 120, for example.

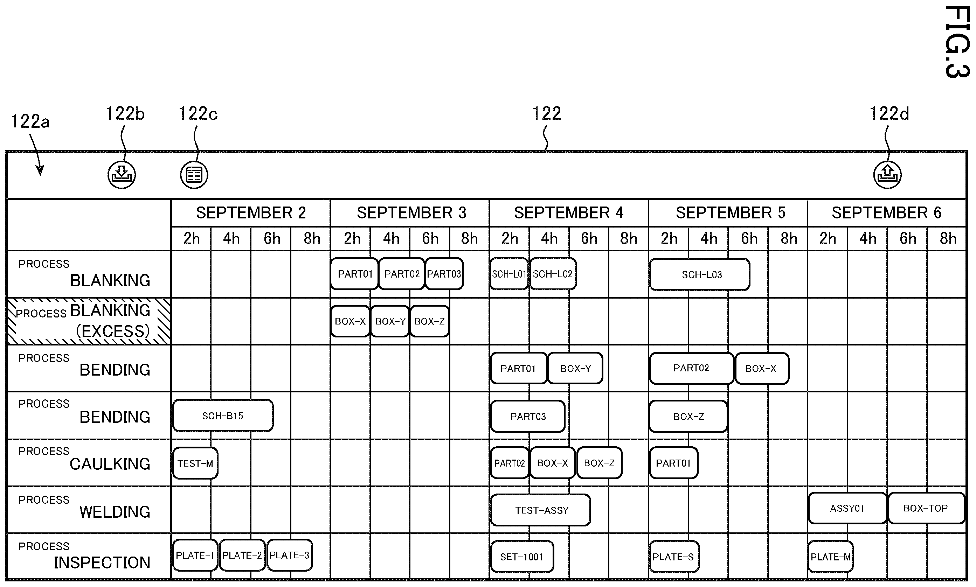

Figure 3 is a diagram showing an example of a production schedule screen in this embodiment.

As shown in Figure 3, the production schedule screen 122 includes a production schedule display area 122a, a production schedule acquisition button 122b, a production schedule reorganization button 122c, and a production schedule save button 122d. The production schedule display area 122a displays the production schedule PS for each manufacturing process in a Gantt chart. In the Gantt chart, icons of production plan information 12 arranged in the production schedule PS is displayed, and the length of an icon represents the process lead time of the production plan information 12.

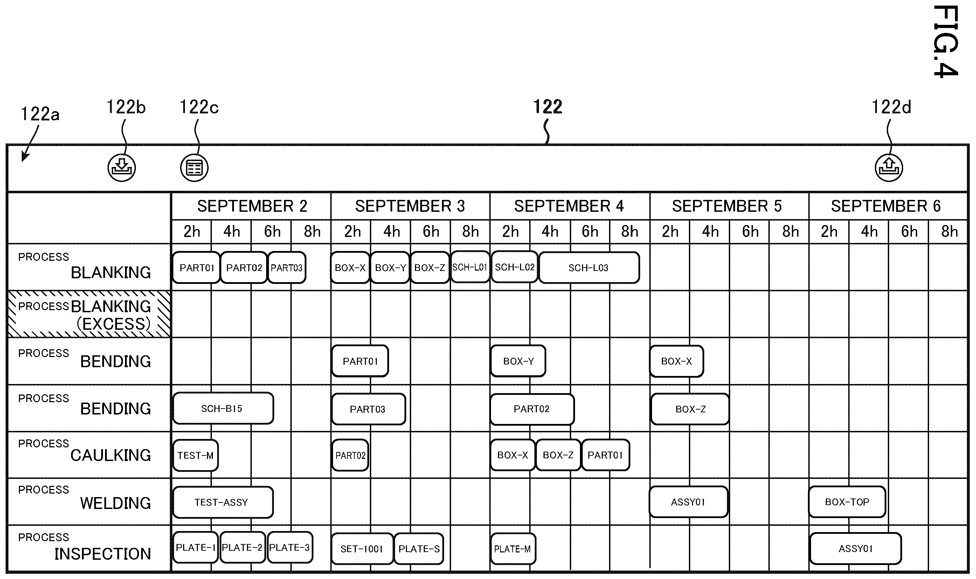

Figure 4 is a diagram showing an example of a production schedule screen after a reorganization process in this embodiment.

The production schedule acquisition button 122b can cause a production schedule modification unit 138 of the control unit 130 described later to acquire the production schedule PS from the server 50. Further, the production schedule acquisition button 122b may be configured to be able to acquire production plan information 12 that has not yet been arranged in the production schedule PS from the server 50. The production schedule reorganization button 122c makes it possible for the production schedule modification unit 138 to reorganize the production schedule PS as shown in Figure 4. The production schedule save button 122d can cause the production schedule modification unit 138 to save the reorganized production schedule PS.

By having such a configuration, the production schedule screen 122 can not only automatically reorganize the production schedule PS, but also allows the user to reorganize the production schedule PS by operating each portion of the production schedule screen 122 to give instructions. Note that in this embodiment, the production schedule screen 122 displays the production schedule PS in a Gantt chart, but without limitation to this, any of a variety of configurations can be employed as long as the configuration allows the user to check the production schedule PS.

Note that the configurations of the input unit 110 and the display unit 120 are not limited to the above-described configurations, and are not limited to them as long as they have equivalent functions instead of the input unit 110 and the display unit 120 (e.g., display means or input means that can be used remotely).

The control unit 130 is composed of, for example, an integrated arithmetic calculation processing device having a CPU (Central Processing Unit) and a GPU (Graphics Processing Unit). As shown in Figure 2, the control unit 130 includes a display control unit 132 that controls the display unit 120, a production plan information acquisition unit 134, a production schedule creation unit 136, and a production schedule modification unit 138.

The production plan information acquisition unit 134 is configured to acquire the production plan information 12 created by the production management device 10 from the production technology management database of the server 50.

The production schedule creation unit 136 creates a production schedule PS for each manufacturing process by arranging a plurality of pieces of production plan information 12 acquired by the production plan information acquisition unit 134 in a schedule for each manufacturing process. Further, the production schedule creation unit 136 may sort the production plan information 12 according to a predetermined condition, and arrange the production plan information 12 in the schedule for each manufacturing process in the sorted order. The predetermined condition is, for example, the number of man-hours or the production delivery date. Only one predetermined condition may be set, or a plurality of predetermined conditions may be set. Note that the sorting is performed for each manufacturing process.

The production schedule creation unit 136 may group the production plan information 12 included in the same work day in each manufacturing process according to attribute information of the production plan information 12 and reorder the arranged production plan information 12 in units of groups obtained by grouping. The reordering is performed based on the priority of the attribute information, the above-described sorted order, or the like.

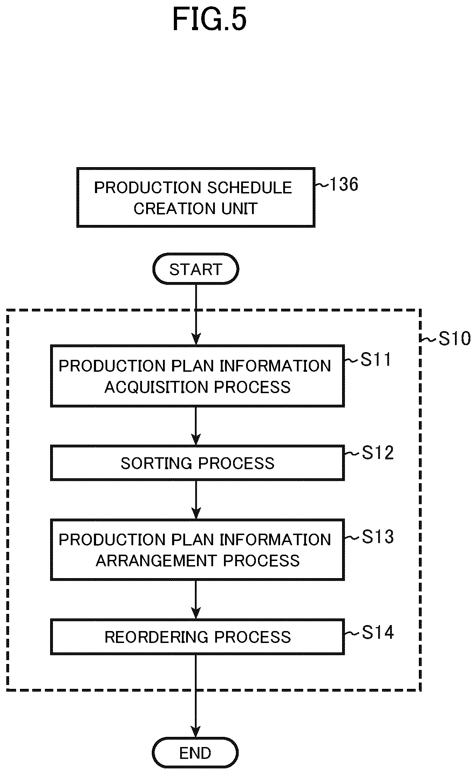

Figure 5 is a flowchart showing an example of a process executed by the production schedule creation unit in this embodiment.

The production schedule creation unit 136 having the above configuration is configured to be able to execute a production schedule creation process (S10 in Figure 5) of creating a production schedule PS for each manufacturing process as shown in Figure 5. The production schedule creation process includes a production plan information acquisition process (S11 in Figure 5) of acquiring production plan information 12, a sorting process (S12 in Figure 5) of sorting the acquired production plan information 12 according to a predetermined condition, a production plan information arrangement process (S13 in Figure 5) of arranging the production plan information 12 in a schedule for each manufacturing process in the sorted order, and a reordering process (S14 in Figure 5) of grouping the production plan information 12 included in the same work day according to attribute information of the production plan information 12 and reordering the production plan information 12 in units of groups obtained by grouping.

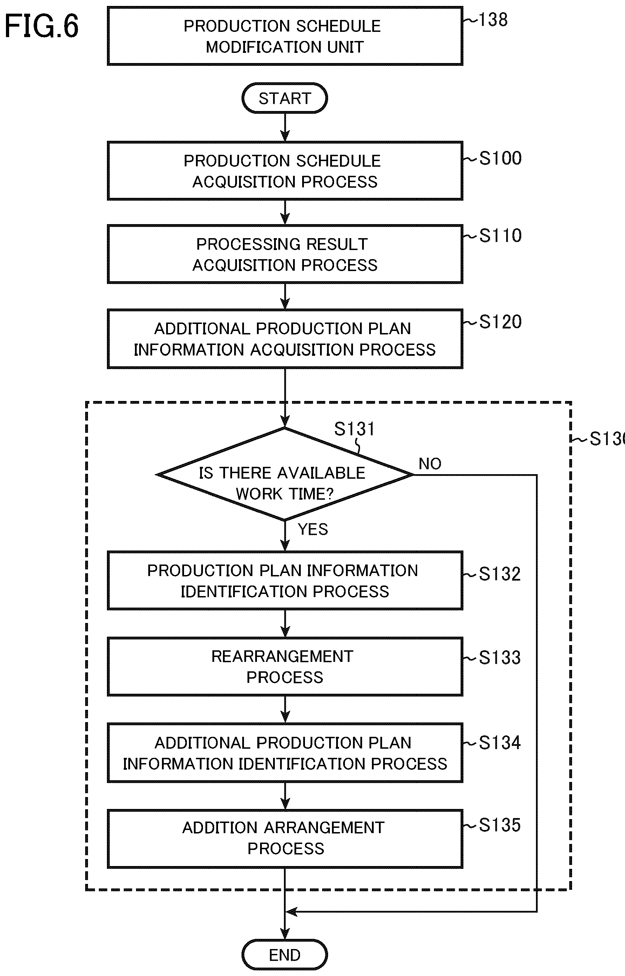

Figure 6 is a flowchart showing an example of a process executed by the production schedule modification unit in this embodiment.

The production schedule modification unit 138 is configured to reorganize the production schedule PS created by the production schedule creation unit 136. Specifically, as shown in Figure 6, the production schedule modification unit 138 is configured to be able to execute a production schedule acquisition process (S100 in Figure 6) of acquiring a production schedule PS for each manufacturing process, and a reorganization process (S130 in Figure 6) of reorganizing the production schedule PS acquired for each manufacturing process.

Further, the production schedule modification unit 138 is configured to be able to execute a processing result acquisition process (S110 in Figure 6) of acquiring a processing result for each manufacturing process. Furthermore, the production schedule modification unit 138 is configured to be able to execute an additional production plan information acquisition process of acquiring additionally created additional production plan information (S120 in Figure 6).

The reorganization process includes an available work time determination process (S131 in Figure 6) of determining whether there is an available work time in the production schedule PS, a production plan information identification process (S132 in Figure 6) of, when there is an available work time, identifying production plan information 12 that can be rearranged to the available work time from among the plurality of pieces of production plan information 12 arranged in the production schedule PS, and a rearrangement process (S133 in Figure 6) of rearranging the identified production plan information 12. Further, the reorganization process includes an additional production plan information identification process (S134 in Figure 6) of, when there is an available work time, identifying additional production plan information that can be arranged to the available work time from the acquired additional production plan information, and an additional arrangement process (S135 in Figure 6) of arranging the identified additional production plan information.

Note that in this embodiment, the reorganization process is performed according to the following rules in order to ensure consistency between manufacturing processes. First, production plan information 12 arranged in the production schedule for each manufacturing process cannot be rearranged before the date and time when the production plan information 12 is arranged in the production schedule of the previous process. For example, when the production schedule of the bending process is reorganized, if the production plan information 12 to be reorganized is arranged on the morning of September 3 in the production schedule of the blanking process, which is the previous process, then even if there is an available work time before the morning of September 3 in the production schedule of the bending process, the production plan information 12 is rearranged to an available work time after the afternoon of September 3.

Further, production plan information 12 of an assembly arranged in the production schedule of an assembly process cannot be rearranged before the date and time when the production plan information 12 of each child part constituting the assembly is arranged in the production schedule of the previous process.

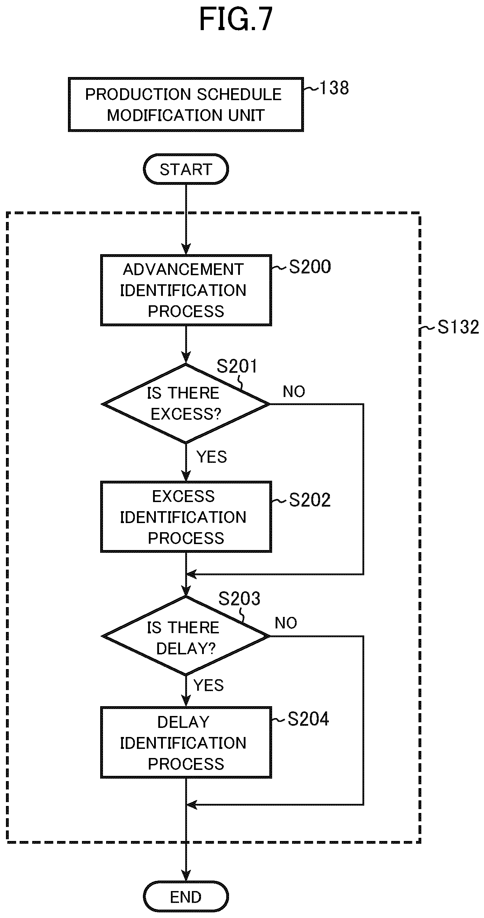

Figure 7 is a flowchart showing an example of a production plan information identification process in this embodiment.

The production plan information identification process includes an advancement identification process (S200 in Figure 7) of identifying production plan information 12 that can be rearranged to the available work time by being advanced as shown in Figure 7.

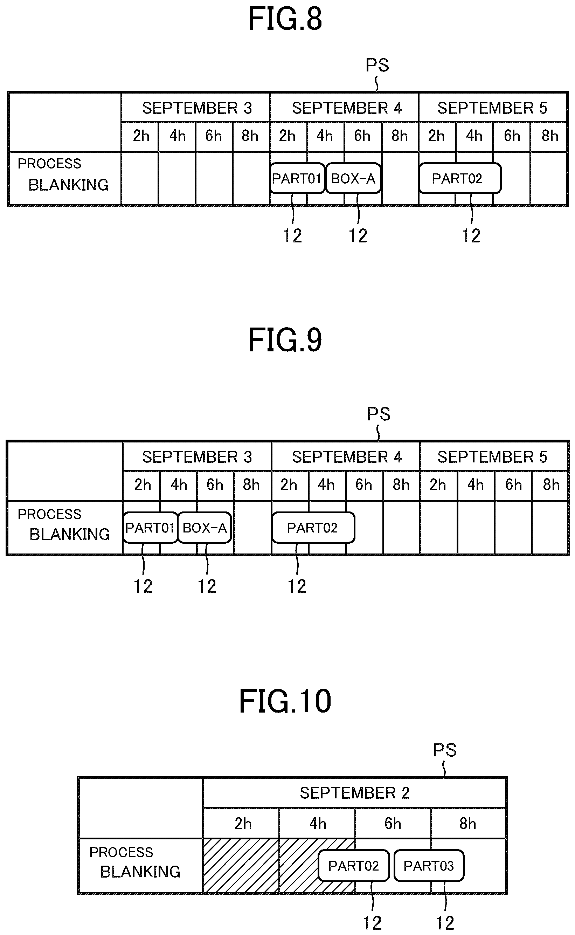

Figure 8 is a diagram showing an example of reorganization of a production schedule including production plan information that can be advanced in this embodiment.

For example, it is assumed that the working time (the operating time at the processing machine 70) in one day is 8 hours. As shown in Figure 8, in the production schedule PS of the blanking process, the pieces of production plan information 12 on "PART01" and "BOX-A" each having a process lead time of three hours are arranged from the start of work to the 6th hour on September 4. Further, in the production schedule PS of the blanking process, production plan information 12 on "PART02" having a process lead time of 4.5 hours is arranged from the start of work to the 4.5th hour on September 5. Furthermore, in the production schedule PS of the blanking process, no production plan information 12 is arranged on September 3, and there is an available work time from the start of work to the end of work.

Figure 9 is a diagram showing an example of reorganization of a production schedule including production plan information that can be advanced in this embodiment.

In this case, as shown in Figure 9, the production schedule modification unit 138 identifies the production plan information 12 on "PART01" and "BOX-A" as production plan information 12 that can be rearranged to the available work time on September 3 by being advanced, and rearranges the production plan information 12 on "PART01" and "BOX-A" to the available work time on September 3 in the rearrangement process. Furthermore, when the production plan information 12 on "PART01" and "BOX-A" is advanced, an available work time is created on September 4, so the production schedule modification unit 138 identifies the production plan information 12 on "PART02" as production plan information 12 that can be rearranged to the available work time on September 4 by being advanced, and rearranges the production plan information 12 on "PART02" to the available work time on September 4 in the rearrangement process.

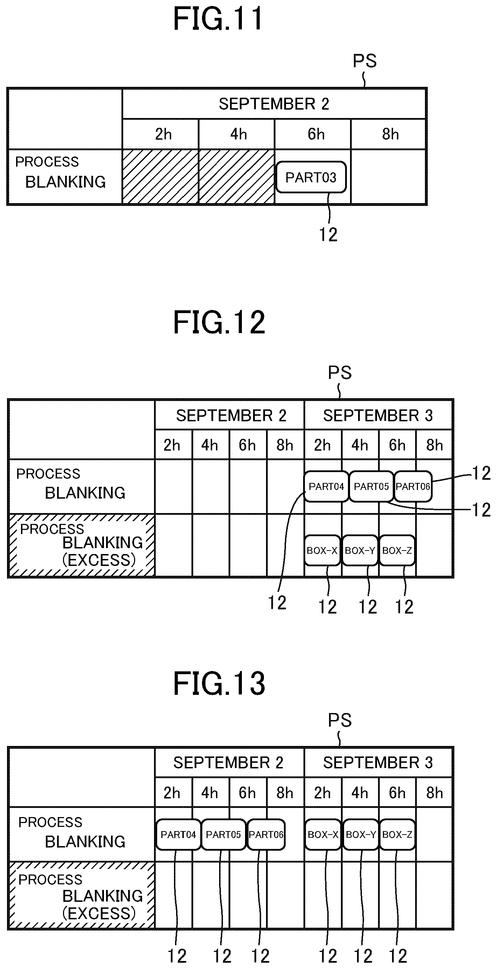

Figures 10 and 11 are diagrams showing a variant of reorganization of a production schedule including production plan information that can be advanced in this embodiment.

As shown in Figures 10 and 11, when there is production plan information 12 for which the work has been completed earlier than the production schedule PS (the production plan information 12 on "PART02" in Figure 10) based on the processing result acquired in the processing result acquisition process, the production schedule modification unit 138 may identify production plan information 12 arranged after that production plan information 12 (the production plan information 12 on "PART03" in Figure 10) as production plan information 12 that can be rearranged by being advanced in the production plan information identification process, and rearrange the identified production plan information 12 in the rearrangement process.

Further, as shown in Figure 7, the production plan information identification process includes an excess determination process (S201 in Figure 7) of determining whether there is excessive production plan information not falling within a daily load amount of the manufacturing processes, and an excess identification process (S202 in Figure 7) of, when there is excessive production plan information (YES in S201 in Figure 7), identifying excessive production plan information that can be rearranged to the available work time. Note that the production plan information 12 for the excess may be separated from the production plan information 12 falling within the load amount at the stage of creating the production schedule PS, or may be separated from the production plan information 12 falling within the load amount when excessive production plan information is found in the excess determination process.

Figure 12 is a diagram showing an example of reorganization of a production schedule including excessive production plan information in this embodiment.

For example, as shown in Figure 12, in the production schedule PS of the blanking process, the pieces of production plan information 12 on "PART04", "PART05", and "PART06" each having a process lead time of 2.3 hours are arranged from the start of work to the 6.9th hour on September 3. Further, in the production schedule PS of the blanking process, the pieces of production plan information 12 on "BOX-X", "BOX-Y", and "BOX-Z" not falling within the load amount for September 3 are arranged. Each of the process lead times of the pieces of production plan information 12 on "BOX-X", "BOX-Y" and "BOX-Z" is two hours. Furthermore, in the production schedule PS of the blanking process, no production plan information 12 is arranged on September 2, and there is an available work time from the start of work to the end of work.

Figure 13 is a diagram showing an example of reorganization of a production schedule including excessive production plan information in this embodiment.

In this case, as shown in Figure 13, the production schedule modification unit 138 first identifies the production plan information 12 on "PART04", "PART05", and "PART06" as production plan information 12 that can be rearranged to the available work time on September 2 by being advanced in the above-described advancement identification process, and rearranges the production plan information 12 on "PART04", "PART05", and "PART06" to the available work time on September 2 in the rearrangement process. Then, when the production plan information 12 on "PART04", "PART05", and "PART06" is advanced, an available work time is created on September 3, so the production plan information 12 on "BOX-X", "BOX-Y", and "BOX-Z" is identified as excessive production plan information that can be rearranged to the available work time on September 3, and the production plan information 12 on "BOX-X", "BOX-Y", and "BOX-Z" is rearranged to the available work time on September 3 in the rearrangement process.

Note that instead of rearranging the production plan information 12 on "PART04", "PART05", and "PART06", the production plan information 12 on "BOX-X", "BOX-Y", and "BOX-Z" may be identified as excessive production plan information that can be rearranged to the available work time on September 2, and the production plan information 12 on "BOX-X", "BOX-Y", and "BOX-Z" may be rearranged to the available work time on September 2 in the rearrangement process.

Furthermore, as shown in Figure 7, the production plan information identification process includes a delay determination process (S203 in Figure 7) of determining whether there is delayed production plan information delayed from the production schedule PS based on the acquired processing result, and a delay identification process (S204 in Figure 7) of, when there is delayed production plan information (YES in S203 in Figure 7), identifying delayed production plan information that can be rearranged to the available work time.

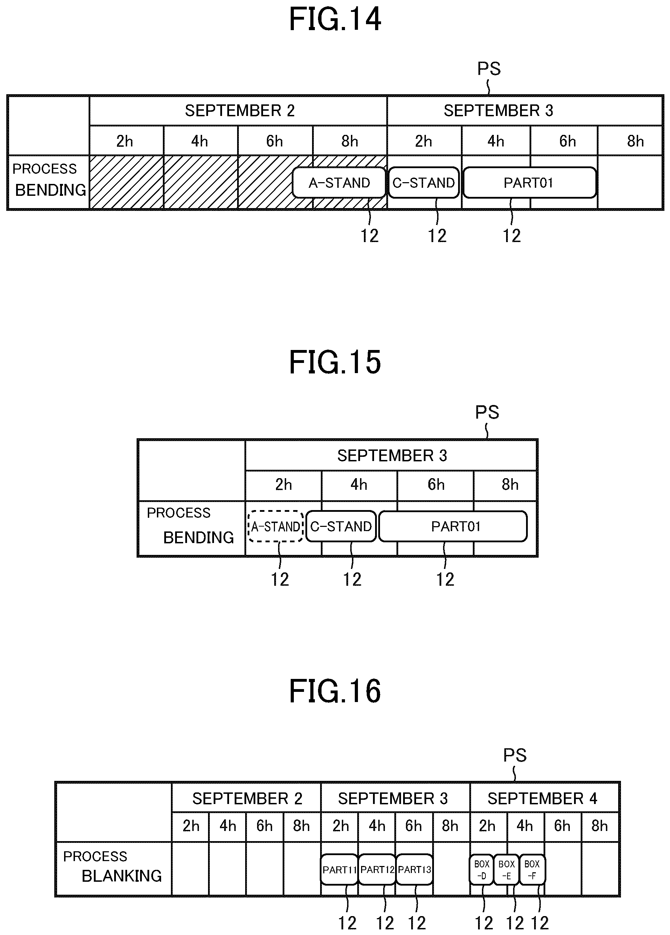

Figure 14 is a diagram showing an example of reorganization of a production schedule including delayed production plan information in this embodiment.

For example, as shown in Figure 14, in the production schedule PS of the bending process, the production plan information 12 on "A-STAND" having a process lead time of 2.5 hours is arranged from the 5.5th hour to the end of work on September 2. Further, in the production schedule PS of the bending process, the production plan information 12 on "C-STAND" having a process lead time of 2 hours is arranged from the start of work to the 2nd hour on September 3, and the production plan information 12 on "PART01" having a process lead time of 4 hours is arranged from the 2nd hour to the 6th hour. Furthermore, in the production schedule PS of the bending process, no production plan information 12 is arranged from the 6th hour to the end of work on September 3, and there is an available work time of two hours.

Figure 15 is a diagram showing an example of reorganization of a production schedule including delayed production plan information in this embodiment.

It is assumed that the work for "A-STAND" is delayed and the work has not been completed within the operating hours on September 2, with 1.5 hours of work remaining out of the 2.5 hours of work. In this case, the production schedule modification unit 138 determines that there is delayed production plan information. Then, as shown in Figure 15, the production schedule modification unit 138 rearranges the production plan information 12 on "C-STAND" and "PART01" arranged from the start of work to the 6th hour on September 3 to the time from the 1.5th hour to the 7.5th hour on September 3 by postponing the production plan information 12. When the production plan information 12 on "C-STAND" and "PART01" is postponed, an available work time is created from the start of work to the 1.5th hour on September 3, so the production schedule modification unit 138 identifies the production plan information 12 on "A-STAND" as delayed production plan information that can be rearranged to the available work time on September 3, and rearranges the production plan information 12 on "A-STAND" to the available work time on September 3 in the rearrangement process.

Note that instead of rearranging the production plan information 12 on "C-STAND" and "PART01", the production plan information 12 on "A-STAND" may be identified as delayed production plan information that can be rearranged to the available work time on September 3 (from the 6th hour to the end of work), and the production plan information 12 on "A-STAND" may be rearranged to the available work time on September 3 in the rearrangement process.

The production schedule modification unit 138 is configured to be able to group the plurality of pieces of production plan information 12 arranged in the production schedule PS under a predetermined condition and rearrange the plurality of pieces of production plan information 12 in units of groups obtained by grouping. In this embodiment, the predetermined condition is, for example, the thickness of a material, constituent parts of an assembly, past processing results, or processing conditions. In the painting process, the processing condition is, for example, a paint color.

In the case of the painting process (e.g., dipping painting and electrodeposition coating) and the plating process, work may be conducted with a plurality of products placed together in one basket. When reorganizing the production schedule PS of these processes, the production schedule modification unit 138 may group a plurality of products in units that can be processed simultaneously based on product shape information, the capacity of a liquid container, capacity information of a basket in which products are placed, and the like.

Figure 16 is a diagram showing an example of reorganization of a production schedule in consideration of grouping of production plan information in this embodiment.

For example, as shown in Figure 16, in the production schedule PS of the blanking process, the pieces of production plan information 12 on "PART11", "PART12" and "PART13" each having a process lead time of 2 hours are arranged from the start of work to the 6th hour on September 3. Further, in the production schedule PS of the blanking process, the pieces of production plan information 12 on "BOX-D", "BOX-E", and "BOX-F" having a process lead time of 1.3 hours are arranged from the start of work to the 4th hour on September 4. "PART 11", "PART 12" and "PART 13" have the same thickness. Further, "BOX-D", "BOX-E" and "BOX-F" have the same thickness.

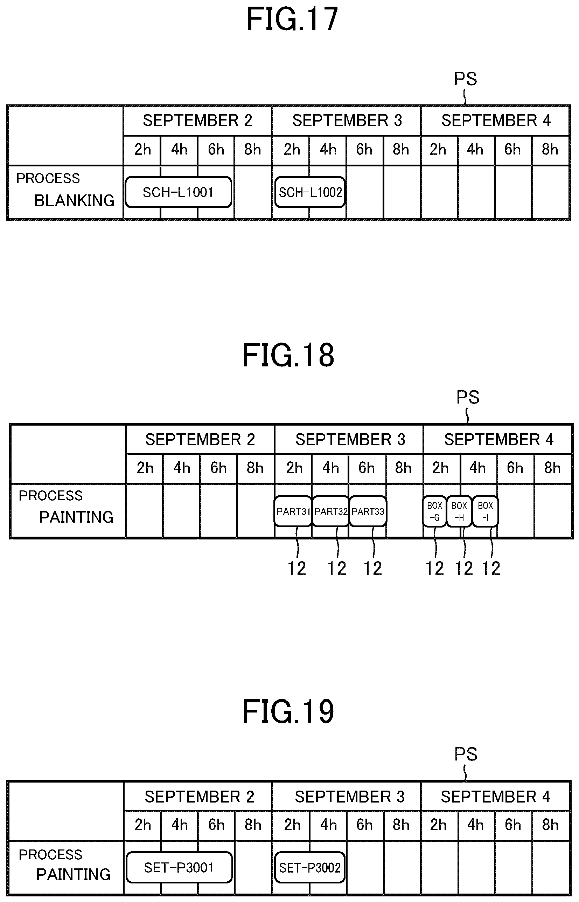

Figure 17 is a diagram showing an example of reorganization of a production schedule in consideration of grouping of production plan information in this embodiment.

In this case, as shown in Figure 17, the production schedule modification unit 138 groups the pieces of production plan information 12 on "PART11", "PART12", and "PART13" with the same thickness into a group "SCH-L1001", groups "BOX-D", "BOX-E", and "BOX-F" with the same thickness into a group "SCH-L1002", and rearranges them in units of groups "SCH-L1001" and "SCH-L1002" in the rearrangement process.

Figure 18 is a diagram showing an example of reorganization of a production schedule in consideration of grouping of production plan information in this embodiment.

For example, as shown in Figure 18, in the production schedule PS of the painting process, the pieces of production plan information 12 on "PART 31", "PART 32", and "PART 33" each having a process lead time of 2 hours are arranged from the start of work to the 6th hour on September 3. Further, in the production schedule PS of the painting process, the pieces of production plan information 12 on "BOX-G", "BOX-H", and "BOX-I" having a process lead time of 1.3 hours are arranged from the start of work to the 4th hour on September 4. "PART31", "PART32" and "PART33" have the same paint color. Further, "BOX-G", "BOX-H" and "BOX-I" have the same paint color.

Figure 19 is a diagram showing an example of reorganization of a production schedule in consideration of grouping of production plan information in this embodiment.

In this case, as shown in Figure 19, the production schedule modification unit 138 groups "PART31", "PART32", and "PART33" with the same paint color into a group "SET-P3001", groups "BOX-G", "BOX-H", and "BOX-I" with the same paint color into a group "SET-P3002", and rearranges them in units of groups "SET-P3001" and "SET-P3002" in the rearrangement process.

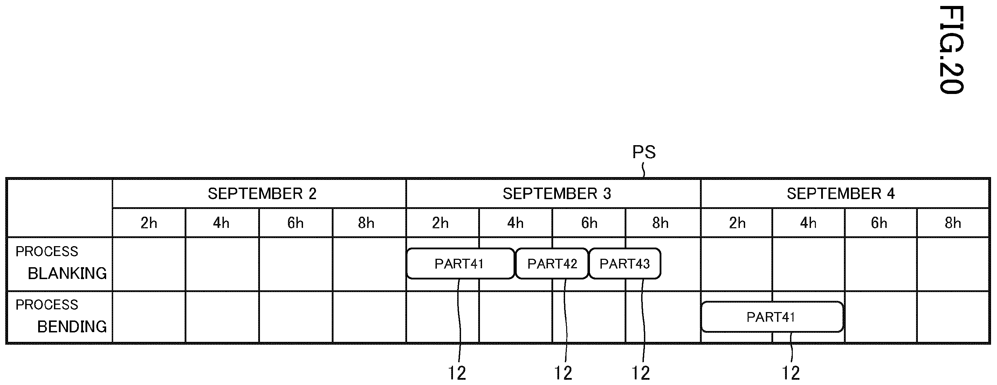

Figure 20 is a diagram showing an example of reorganization of a production schedule when a defect in a processing machine is acquired in this embodiment.

Further, the production schedule modification unit 138 is configured to, when the defect acquisition means 150 acquires a defect, exclude the production schedule PS of the manufacturing process that uses the processing machine 70 in which the defect has occurred from the reorganization process. For example, as shown in Figure 20, in the production schedule PS of the blanking process, the production plan information 12 on "PART41" having a process lead time of three hours is arranged from the start of work to the 3rd hour on September 3. Further, in the production schedule PS of the blanking process, "PART 42" and "PART 43" each having a process lead time of 2 hours are arranged from the 3rd hour to the 7th hour on September 3.

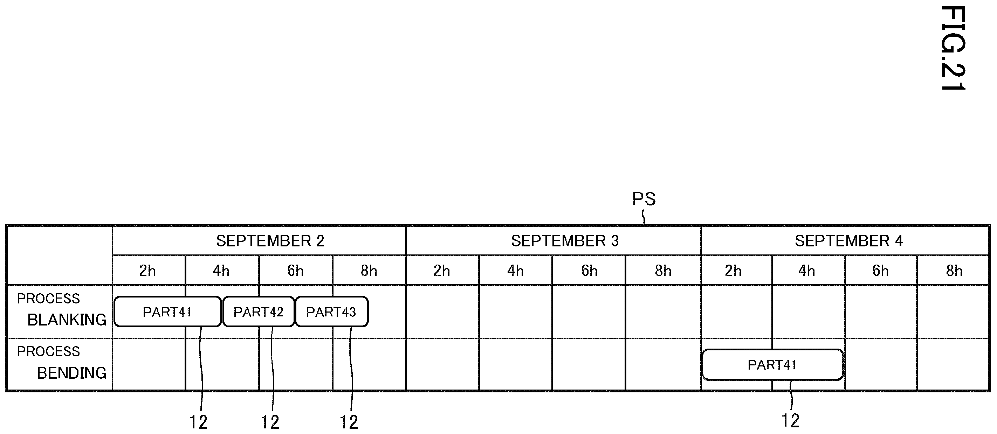

Figure 21 is a diagram showing an example of reorganization of a production schedule when a defect in a processing machine is acquired in this embodiment.

In the production schedule PS of the bending process, the production plan information 12 on "PART 41" having a process lead time of 4 hours is arranged from the start of work to the 4th hour on September 4. In the production schedule PS of the blanking process, no production plan information 12 is arranged on September 2, and there is an available work time from the start of work to the end of work. Further, in the production schedule PS of the bending process, no production plan information 12 is arranged on September 2 and September 3, and there are available work times from the start of work to the end of work. Here, if the defect acquisition means 150 has acquired a defect in the processing machine 70 in the bending process, the production schedule modification unit 138 executes the reorganization process for the blanking process but excludes the bending process from the reorganization process as shown in Figure 21.

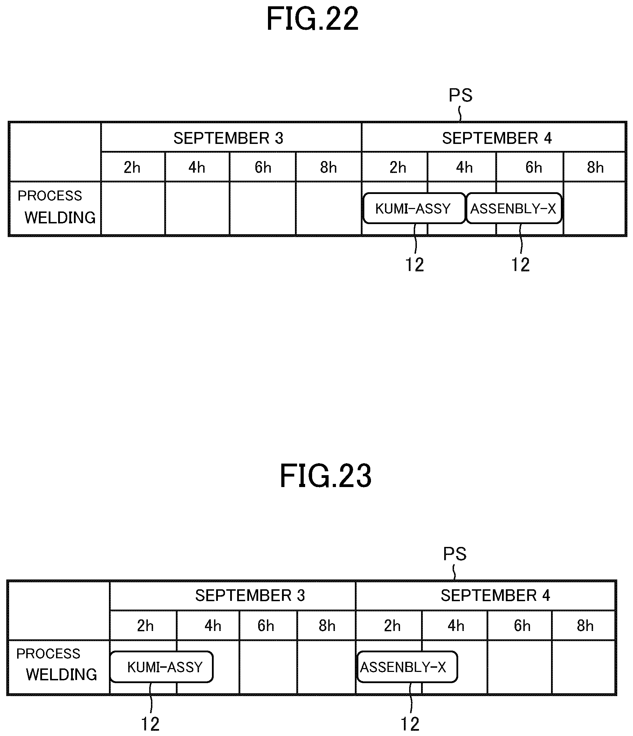

Figure 22 is a diagram showing an example of reorganization of a production schedule in consideration of attendance information in this embodiment.

Furthermore, the production schedule modification unit 138 is configured to be unable to rearrange the production plan information 12 to a date and time when the personnel in charge is insufficient based on the attendance information. For example, as shown in Figure 22, in the production schedule PS of the welding process, the pieces of production plan information 12 on "KUMI-ASSY" and "ASSENBLY-X" each having a process lead time of 3 hours are arranged from the start of work to the 6th hour on September 4. Further, in the production schedule PS of the welding process, no production plan information 12 is arranged on September 3, and there is an available work time from the start of work to the end of work.

Figure 23 is a diagram showing an example of reorganization of a production schedule in consideration of attendance information in this embodiment.

Here, if it is known from the attendance information acquired by the attendance information acquisition means 160 that the personnel in charge of the welding process will be insufficient from the 3rd hour to the 8th hour on September 3, the production schedule modification unit 138 rearranges the production plan information 12 on "KUMI-ASSY" to the available work time from the start of work to the 3rd hour on September 3 as shown in Figure 23. Then, the production schedule modification unit 138 does not rearrange the production plan information 12 on "ASSENBLY-X" to the available work time from the 3rd hour to the 8th hour on September 3, but rearranges the production plan information 12 on "ASSENBLY-X" to the time from the start of work to the 3rd hour on September 4.

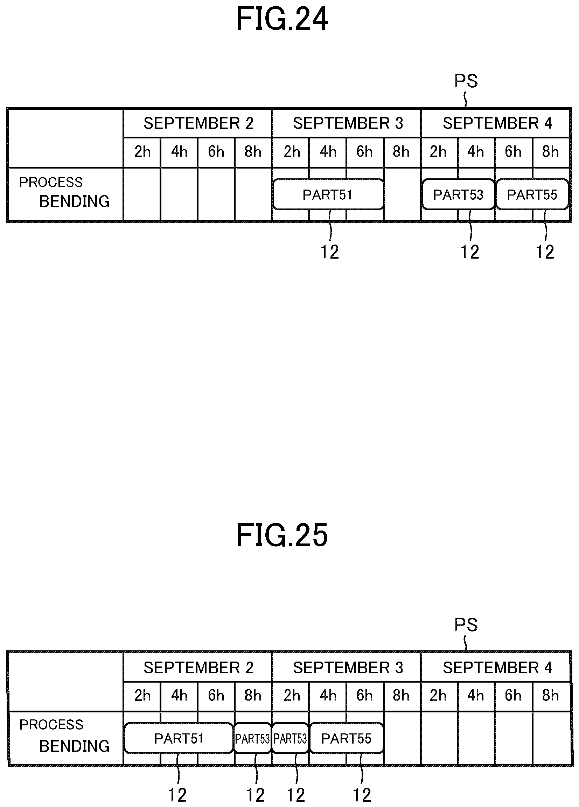

Figure 24 is a diagram showing an example of reorganizing a production schedule by dividing production plan information in this embodiment.

The production schedule modification unit 138 is configured to be able to divide one piece of production plan information 12 into a plurality of pieces of production plan information 12 and rearrange the plurality of pieces of production plan information 12 in the production schedule PS. For example, as shown in Figure 24, in the production schedule PS of the bending process, production plan information 12 on "PART51" having a process lead time of six hours is arranged from the start of work to the 6th hour on September 3. Further, in the production schedule PS of the bending process, the pieces of production plan information 12 on "PART 53" and "PART 55" each having a process lead time of 4 hours are rearranged from the start of work to the end of work on September 4. Furthermore, in the production schedule PS of the bending process, no production plan information 12 is arranged on September 2, and there is an available work time from the start of work to the end of work.

Figure 25 is a diagram showing an example of reorganizing a production schedule by dividing production plan information in this embodiment.

In this case, the production schedule modification unit 138 first rearranges the production plan information 12 on "PART51" to the time from the start of work to the 6th hour on September 2 as shown in Figure 25. In this case, while there is an available work time of 8 hours on September 2, the process lead time of "PART51" is 6 hours, so only an available work time of 2 hours is left on September 2. Therefore, the production schedule modification unit 138 divides "PART 53" having a process lead time of four hours into two parts of two hours each, rearranges the production plan information 12 for the first half to the time from the 6th hour to the 8th hour on September 2, and rearranges the production plan information 12 for the latter half to the time from the start of work to the 2nd hour on September 3. Then, the production schedule modification unit 138 rearranges the production plan information 12 on "PART55" to the time from the 2nd hour to the 6th hour on September 3.

In addition to the above, the production schedule modification unit 138 may execute the reorganization process taking into account user settings (e.g., prioritizing items with a larger number of man-hours, prioritizing items with earlier process deadlines, etc.).

The storage unit 140 has a storage medium such as a hard disk drive (HDD) or a solid state drive (SSD), and stores various data in a readable and writable manner. The storage unit 140 stores a scheduling program 142 as shown in Figure 2. Further, the storage unit 140 stores programs necessary for controlling each part of the scheduling device 100.

The scheduling program 142 causes the scheduling device 100 to execute a production schedule acquisition process of acquiring a production schedule PS for each manufacturing process in which a plurality of pieces of production plan information 12 for a product are arranged, and a reorganization process of reorganizing the production schedule PS acquired for each manufacturing process. The reorganization process includes an available work time determination process of determining whether there is an available work time in the production schedule PS, a production plan information identification process of, when there is an available work time, identifying production plan information 12 that can be rearranged to the available work time from among the plurality of pieces of production plan information 12 arranged in the production schedule PS, and a rearrangement process of rearranging the identified production plan information 12.

The server 50 has a storage medium such as an HDD or an SSD, and stores a production technology management database (not shown). Since the server 50 can employ a variety of known configurations, a detailed description thereof will be omitted. The production technology management database includes data created by the production management device 10, the design aided device 30, and the scheduling device 100. The data stored in the production technology management database is referenced by the production management device 10, the design aided device 30, the scheduling device 100 and the workplace terminal 200.

The processing machine 70 is a blanking machine 70a that processes sheets by NC control, a secondary processing machine 70b that processes individual works in progress after blanking, or the like. The blanking machine 70a is, for example, a laser processing machine, a turret punch press, a plasma processing machine, a water jet processing machine, or the like. The secondary processing machine 70b is, for example, a bending machine such as a press brake, an NC milling machine, an NC lathe, a machining center, a drilling machine, a grinding machine, or the like. The processing machine 70 is configured to be able to communicate with the production management device 10, the design aided device 30, the server 50 and the scheduling device 100.

Further, the processing machine 70 may transmit processing results to the production management device 10 and the scheduling device 100 when processing is started, when processing is interrupted, and when processing is completed. The processing results include, for example, information such as the time corresponding to each of the start, interruption, and completion of processing for each sheet. The blanking machine 70a performs processing by, for example, reading sheet data of processing schedule information from the production technology management database stored in the server 50. The secondary processing machine 70b performs processing by, for example, reading a processing program of processing schedule information from a production technology management database stored in the server 50.

The workplace terminal 200 is an electronic computer such as a desktop personal computer, a laptop computer, or a tablet terminal, and is connected to the production management device 10, the scheduling device 100, and the like via a network. The workplace terminal 200 is configured to make it possible to view the production schedule PS by connecting to the scheduling device 100. Specifically, the workplace terminal 200 includes a display unit and is configured to be able to display the production schedule screen 122 on the display unit.

### [Scheduling Method According to This Embodiment]

Next, a scheduling method performed by the scheduling system 1 according to this embodiment will be described. The scheduling method according to this embodiment generally includes a production schedule acquisition step of acquiring a production schedule PS for each manufacturing process in which a plurality of pieces of production plan information 12 for a product are arranged, and a reorganization step of reorganizing the production schedule PS acquired for each manufacturing process. The reorganization step includes an available work time determination step of determining whether there is an available work time in the production schedule PS, a production plan information identification step of, when there is an available work time, identifying production plan information 12 that can be rearranged to the available work time from among the plurality of pieces of production plan information 12 arranged in the production schedule PS, and a rearrangement step of rearranging the identified production plan information 12.

Further, the scheduling method according to this embodiment includes a production schedule creation step of creating a production schedule PS for each manufacturing process by acquiring production plan information 12 and arranging the acquired plurality of pieces of production plan information 12 in a schedule for each manufacturing process, an update step of updating the time on the production schedule screen 122 on the display unit 120 of the scheduling device 100, a processing result acquisition step of acquiring a processing result for each manufacturing process, and a processing result reflection step of reflecting the acquired processing result in the production schedule screen 122.

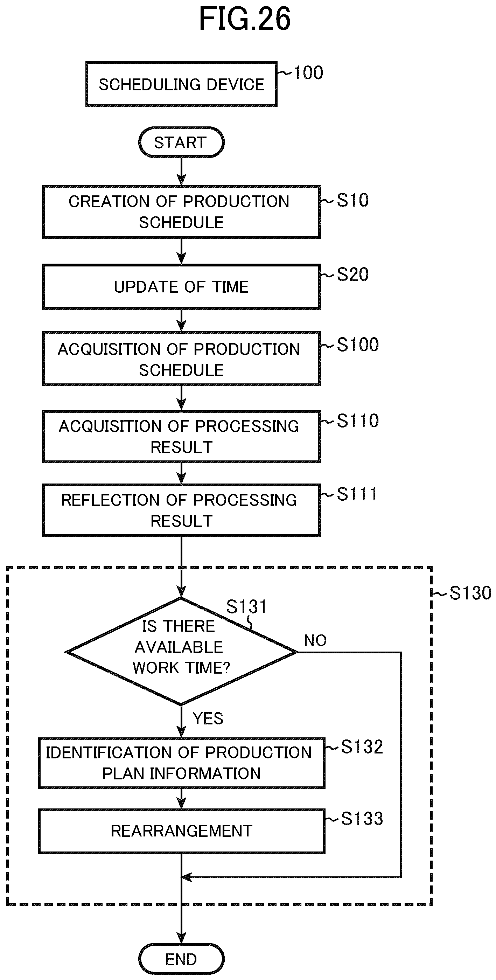

Figure 26 is a flowchart showing an example of a scheduling method in this embodiment.

The scheduling method according to this embodiment will be described in detail with reference to Figure 26. First, the scheduling device 100 creates a production schedule PS for each manufacturing process by acquiring production plan information 12 and arranging the acquired plurality of pieces of production plan information 12 in a schedule for each manufacturing process (S10 in Figure 26: the production schedule creation step).

Specifically, the scheduling device 100 first acquires production plan information 12 created by the production management device 10 from the production technology management database in the server 50 (the production plan information acquisition step). Then, the scheduling device 100 sorts the acquired production plan information 12 according to a predetermined condition (a sorting step). Next, the scheduling device 100 arranges the production plan information 12 in a schedule for each manufacturing process in the sorted order (a production plan information arrangement step).

After that, production plan information 12 included in the same work day is grouped according to attribute information of the production plan information 12, and reordered in units of groups obtained by grouping (a reordering step). Through these steps, a basic production schedule PS is first created. After the production schedule PS is created, the scheduling device 100 stores the created production schedule PS in the production technology management database of the server 50. Further, the scheduling device 100 displays the production schedule screen 122 of the created production schedule PS on the display unit 120.

After the created production schedule PS is put into operation, the scheduling device 100 updates the time on the production schedule screen 122 as time passes (S20 in Figure 26: the update step). Specifically, the production schedule screen 122 is updated so that the current time is displayed on its left end portion. Next, the scheduling device 100 acquires the production schedule PS from the production technology management database in the server 50 (S100 in Figure 26: the production schedule acquisition step).

After the production schedule PS is put into operation, the processing machine 70 in each manufacturing process transmits the processing result of the product for the production plan information 12 for which the work has been performed to the production management device 10 and the scheduling device 100. Then, the scheduling device 100 acquires the processing result of the processing machine 70 transmitted from the processing machine 70 (S110 in Figure 26: the processing result acquisition step). The scheduling device 100 reflects the acquired processing result in the production schedule screen 122 (S111 in Figure 26: the processing result reflection step). For example, the icon of the production plan information 12 for which the work has already been completed is deleted from the production schedule screen 122, while the icon of the delayed production plan information 12 is left on the production schedule screen 122. Further, the icon of the delayed production plan information 12 may be highlighted.

Next, the scheduling device 100 reorganizes the production schedule PS for each manufacturing process (S130 in Figure 26: the reorganization step). Specifically, the scheduling device 100 first determines whether there is an available work time in the production schedule PS for each manufacturing process (S131 in Figure 26: the available work time determination step). When there is an available work time in the production schedule PS (YES in S131 in Figure 26), the scheduling device 100 identifies production plan information 12 that can be rearranged to the available work time from among the plurality of pieces of production plan information 12 arranged in the production schedule PS of the manufacturing process having the available work time (S132 in Figure 26: the production plan information identification step).

After that, the scheduling device 100 rearranges the identified rearrangeable production plan information 12 to the available work time (S133 in Figure 26: the rearrangement step). Then, the scheduling device 100 stores the reorganized production schedule PS in the production technology management database of the server 50. On the other hand, if there is no available work time in the production schedule PS (NO in S131 in Figure 26), the scheduling device 100 ends the process without reorganizing the production schedule PS of the manufacturing process having no available work time. Through the above steps, the sequential scheduling method performed by the scheduling system 1 according to this embodiment is executed.

### [Advantages of Scheduling Device, Scheduling Method, and Scheduling Program According to This Embodiment]

As described above, the scheduling device 100 according to this embodiment is configured to be able to execute: a production schedule acquisition process of acquiring a production schedule PS for each of one or more manufacturing processes in which a plurality of pieces of production plan information 12 for a product including one or more parts are arranged; and a reorganization process of reorganizing the production schedule PS acquired for each of the one or more manufacturing processes, wherein the reorganization process includes: an available work time determination process of determining whether there is an available work time in the production schedule PS; a production plan information identification process of, when there is the available work time, identifying the production plan information 12 that can be rearranged to the available work time from among the plurality of pieces of production plan information 12 arranged in the production schedule PS; and a rearrangement process of rearranging the identified production plan information 12, and the production plan information 12 includes a process lead time for each of the one or more manufacturing processes of the product and a scheduled work date and a work completion date for each of the one or more manufacturing processes of the product.

Then, by having such a configuration, the scheduling device 100 according to this embodiment identifies and rearranges production plan information 12 that matches an available work time in the production schedule PS, and therefore has the advantage of being able to automatically modify the created production schedule PS.

Further, in the scheduling device 100 according to this embodiment, the production plan information identification process includes an advancement identification process of identifying the production plan information 12 that can be rearranged to the available work time by being advanced. By having such a configuration, there is an advantage that the production schedule PS can be modified by advancing production plan information 12 that can be automatically advanced.

Furthermore, in the scheduling device 100 according to this embodiment, the production plan information identification process includes: an excess determination process of determining whether there is excessive production plan information not falling within a daily load amount of the one or more manufacturing processes; and an excess identification process of, when there is the excessive production plan information, identifying the excessive production plan information that can be rearranged to the available work time. By having such a configuration, there is an advantage that the production schedule PS can be automatically modified so that the production plan information 12 falls within the load amount of the one or more manufacturing processes.

Yet further, the scheduling device 100 according to this embodiment is configured to be able to execute a processing result acquisition process of acquiring a processing result for each of the one or more manufacturing processes, and the production plan information identification process includes: a delay determination process of determining whether there is delayed production plan information delayed from the production schedule PS based on the acquired processing result; and a delay identification process of, when there is the delayed production plan information, identifying the delayed production plan information that can be rearranged to the available work time. By having such a configuration, there is an advantage that, when a delay has occurred, the production schedule PS can be automatically modified to match the delay.

Further, the scheduling device 100 according to this embodiment is configured to be able to execute an additional production plan information acquisition process of acquiring additionally created additional production plan information, and the reorganization process includes: an additional production plan information identification process of, when there is the available work time, identifying the additional production plan information that can be arranged to the available work time from the acquired additional production plan information; and an additional arrangement process of arranging the identified additional production plan information. By having such a configuration, there is an advantage that the production schedule PS can be automatically modified even when there are unexpected orders.

Furthermore, the scheduling device 100 according to this embodiment is configured to be able to group the plurality of pieces of production plan information 12 arranged in the production schedule PS under a predetermined condition and rearrange the plurality of pieces of production plan information in units of groups obtained by grouping. By having such a configuration, there is an advantage that the production schedule PS can be modified without dispersing a plurality of pieces of production plan information 12 that are more efficient when worked on continuously or collectively.

Yet further, the scheduling device 100 according to this embodiment further includes defect acquisition means 150 capable of acquiring a defect in a processing machine 70 used in one of the one or more manufacturing processes, wherein the scheduling device is configured to, when the defect acquisition means 150 acquires the defect, exclude the production schedule PS for the one of the one or more manufacturing processes using the processing machine 70 in which the defect has occurred from the reorganization process. By having such a configuration, there is an advantage that the production schedule PS can be automatically modified in consideration of defects in the processing machine 70.

Further, the scheduling device 100 according to this embodiment further includes attendance information acquisition means 160 capable of acquiring attendance information of personnel in charge of each of the one or more manufacturing processes, wherein the scheduling device is configured to be unable to rearrange the production plan information 12 to a date and time when the personnel in charge is insufficient based on the attendance information. By having such a configuration, there is an advantage that the production schedule PS can be modified to avoid dates and times when the personnel in charge is insufficient due to paid leave or unexpected leave of personnel in charge of manual processes or the like.

Furthermore, the scheduling device 100 according to this embodiment is configured to be able to divide one of the pieces of production plan information 12 into a plurality of pieces of production plan information 12 and rearrange the plurality of pieces of production plan information 12 in the production schedule PS. By having such a configuration, there is an advantage that the production plan information 12 can be rearranged in the production schedule PS with no gaps so as to eliminate waste in the load amount of each process.

### [Variants]

Although a preferred embodiment of the present invention has been described above, the technical scope of the present invention is not limited to the scope described in the above-described embodiment. Various changes or improvements can be made to the above-described embodiment.

For example, in the above-described embodiment, the production plan information identification process has been described as including an advancement identification process of identifying the production plan information 12 that can be rearranged to the available work time by being advanced, but without limitation to this, the production plan information identification process may not include the advancement identification process.

In the above-described embodiment, the production plan information identification process has been described as including: an excess determination process of determining whether there is excessive production plan information not falling within a daily load amount of the one or more manufacturing processes; and an excess identification process of, when there is the excessive production plan information, identifying the excessive production plan information that can be rearranged to the available work time, but without limitation to this, the production plan information identification process may not include the excess determination process and the excess identification process.

In the above-described embodiment, the scheduling device 100 has been described as being configured to be able to execute a processing result acquisition process of acquiring a processing result for each of the one or more manufacturing processes, wherein the production plan information identification process includes: a delay determination process of determining whether there is delayed production plan information delayed from the production schedule PS based on the acquired processing result; and a delay identification process of, when there is the delayed production plan information, identifying the delayed production plan information that can be rearranged to the available work time, but it is not limited to this. The scheduling device 100 may not be able to execute the processing result acquisition process. Further, the production plan information identification process may not include the delay determination process and the delay identification process.

In the above-described embodiment, the scheduling device 100 has been described as being configured to be able to execute an additional production plan information acquisition process of acquiring additionally created additional production plan information, wherein the reorganization process includes: an additional production plan information identification process of, when there is the available work time, identifying the additional production plan information that can be arranged to the available work time from the acquired additional production plan information; and an additional arrangement process of arranging the identified additional production plan information, but it is not limited to this. The scheduling device 100 may not be able to execute the additional production plan information acquisition process. Further, the reorganization process may not include the additional production plan information identification process and the additional arrangement process.

In the above-described embodiment, the scheduling device 100 has been described as being configured to be able to group the plurality of pieces of production plan information 12 arranged in the production schedule PS under a predetermined condition and rearrange the plurality of pieces of production plan information 12 in units of groups obtained by grouping, but it is not limited to this. The production plan information 12 may not include attribute information. Further, the scheduling device 100 may not be configured to able to classify a plurality of pieces of production plan information 12 arranged in the production schedule PS into groups each having the same type of attribute information and rearrange the plurality of pieces of production plan information 12 in units of groups obtained by grouping.

In the above-described embodiment, the scheduling device 100 has been described as further including defect acquisition means 150 capable of acquiring a defect in a processing machine 70 used in one of the one or more manufacturing processes, wherein the scheduling device 100 is configured to, when the defect acquisition means 150 acquires the defect, exclude the production schedule PS for the one of the one or more manufacturing processes using the processing machine 70 in which the defect has occurred from the reorganization process, but it is not limited to this. The scheduling device 100 may not include the defect acquisition means 150. Further, the scheduling device 100 may not be configured to exclude the production schedule PS of a manufacturing process that uses a processing machine 70 in which a defect has occurred from the reorganization process.

In the above-described embodiment, the scheduling device 100 has been described as including attendance information acquisition means 160 capable of acquiring attendance information of personnel in charge of each of the one or more manufacturing processes, wherein the scheduling device 100 is configured to be unable to rearrange the production plan information 12 to a date and time when the personnel in charge is insufficient based on the attendance information, but it is not limited to this. The scheduling device 100 may not include the attendance information acquisition means 160. Further, the scheduling device 100 may not be configured to be unable to rearrange the production plan information 12 to a date and time when the personnel in charge is insufficient based on the attendance information.

In the above-described embodiment, the scheduling device 100 has been described as being configured to be able to divide one of the pieces of production plan information 12 into a plurality of pieces of production plan information 12 and rearrange the plurality of pieces of production plan information 12 in the production schedule PS, but without limitation to this, the scheduling device 100 may not be able to divide one piece of production plan information 12 into a plurality of pieces of production plan information 12 and rearrange the plurality of pieces of production plan information 12 in the production schedule PS.

In the above-described embodiment, the scheduling system 1 has been described as including the scheduling device 100, the production management device 10 functioning as a production management unit, the design aided device 30 functioning as a design aided unit, the server 50, and the processing machine 70, but without limitation to this, some or all of the above-mentioned devices may be configured integrally.

In the above-described embodiment, the scheduling system 1 has been described as including the workplace terminal 200, but without limitation to this, the scheduling system 1 may not include the workplace terminal 200.

In the above-described embodiment, the scheduling system 1 has been described as including the server 50 and having the production technology management database stored in the server 50, but without limitation to this, the scheduling system 1 may not include the server 50, and the production technology management database may be stored in the storage unit 140 of the scheduling device 100. Further, the scheduling system 1 may not include the production technology management database, and data created by the production management device 10, the design aided device 30, and the scheduling device 100 may be stored in each device.

In the above-described embodiment, the processing machine 70 has been described as being configured to be able to communicate with the production management device 10, the design aided device 30, the server 50, and the scheduling device 100, but without limitation to this, the processing machine 70 may not be able to communicate with the production management device 10, the design aided device 30, the server 50, and the scheduling device 100.

In the above-described embodiment, the scheduling device 100 has been described on the assumption that a production schedule PS once created is partially updated and continuously used, but it is not limited to this. The scheduling device 100 is configured to be able to execute a production schedule reset process of deleting all of the production plan information 12 arranged in the production schedule PS, and, for example, may reset the production schedule PS periodically or at predetermined timing.

In the above-described embodiment, each manufacturing process has been described on the assumption that one processing machine 70 is provided, but without limitation to this, a plurality of processing machines 70 may be provided. Further, when a plurality of processing machines 70 are provided in a manufacturing process, the scheduling device 100 may separately create and manage a plurality of respective production schedules PS of the manufacturing process for the processing machines 70. For example, when two blanking machines 70a are provided in the blanking process, a production schedule PS for the blanking process (1) and a production schedule PS for the blanking process (2) may be created and managed.

### Reference Signs List

- 1: scheduling system
- 10: production management device
- 12: production plan information
- 30: design aided device
- 50: server
- 70: processing machine
- 70a: blanking machine
- 70b: secondary processing machine
- 100: scheduling device
- 110: input unit
- 120: display unit
- 122: production schedule screen
- 122a: production schedule display area
- 122b: production schedule acquisition button
- 122c: production schedule reorganization button
- 122d: production schedule save button
- 130: control unit
- 132: display control unit
- 134: production plan information acquisition unit
- 136: production schedule creation unit
- 138: production schedule modification unit
- 140: storage unit
- 142: scheduling program
- 150: defect acquisition means
- 160: attendance information acquisition means
- 200: workplace terminal
- AP: access point
- PS: production schedule

## Claims

1. A scheduling device (100) configured to execute:
a production schedule acquisition process of acquiring a production schedule (PS) for each of one or more manufacturing processes in which a plurality of pieces of production plan information (12) for a product including one or more parts are arranged; and
a reorganization process of reorganizing the production schedule (PS) acquired for each of the one or more manufacturing processes, wherein
the reorganization process includes:
an available work time determination process of determining whether there is an available work time in the production schedule (PS);
a production plan information (12) identification process of, when there is the available work time, identifying the production plan information (12) that can be rearranged to the available work time from among the plurality of pieces of production plan information (12) arranged in the production schedule (PS); and
a rearrangement process of rearranging the identified production plan information (12), to the available work time, causing another available work time, wherein the production plan information (12) includes a process lead time for each of the one or more manufacturing processes of the product and a scheduled work date and a work completion date for each of the one or more manufacturing processes of the product, and the production plan information (12) identification process includes:
an excess determination process of determining whether there is excessive production plan information (12) not falling within a daily load amount of the one or more manufacturing processes; and
an excess identification process of, when there is the excessive production plan information (12), identifying the excessive production plan information (12) that can be rearranged to the another available work time, a rearrangement process of rearranging the identified excessive production plan information to the another available work time.

2. The scheduling device (100) according to claim 1, wherein the production plan information (12) identification process includes an advancement identification process of identifying the production plan information (12) that can be rearranged to the available work time by being advanced.

3. The scheduling device (100) according to claim 1 or 2, wherein the scheduling device (100) is configured to be able to execute a processing result acquisition process of acquiring a processing result for each of the one or more manufacturing processes, and the production plan information (12) identification process includes:
a delay determination process of determining whether there is delayed production plan information (12) delayed from the production schedule (PS) based on the acquired processing result; and
a delay identification process of, when there is the delayed production plan information (12), identifying the delayed production plan information (12) that can be rearranged to the available work time.

4. The scheduling device (100) according to claim 1 or 2, wherein the scheduling device (100) is configured to be able to execute an additional production plan information (12) acquisition process of acquiring additionally created additional production plan information (12), and
the reorganization process includes:
an additional production plan information (12) identification process of, when there is the available work time, identifying the additional production plan information (12) that can be arranged to the available work time from the acquired additional production plan information (12); and
an additional arrangement process of arranging the identified additional production plan information (12).

5. The scheduling device (100) according to claim 1 or 2, wherein the scheduling device (100) is configured to be able to group the plurality of pieces of production plan information (12) arranged in the production schedule (PS) under a predetermined condition and rearrange the plurality of pieces of production plan information (12) in units of groups obtained by grouping.

6. The scheduling device (100) according to claim 1 or 2, further comprising defect acquisition means (150) capable of acquiring a defect in a processing machine (70) used in one of the one or more manufacturing processes, wherein
the scheduling device (100) is configured to, when the defect acquisition means (150) acquires the defect, exclude the production schedule (PS) for the one of the one or more manufacturing processes using the processing machine (70) in which the defect has occurred from the reorganization process.

7. The scheduling device (100) according to claim 1 or 2, further comprising attendance information acquisition means (160) capable of acquiring attendance information of personnel in charge of each of the one or more manufacturing processes, wherein
the scheduling device (100) is configured to be unable to rearrange the production plan information (12) to a date and time when the personnel in charge is insufficient based on the attendance information.

8. The scheduling device (100) according to claim 1 or 2, wherein the scheduling device (100) is configured to be able to divide one of the pieces of production plan information (12) into a plurality of pieces of production plan information (12) and rearrange the plurality of pieces of production plan information (12) in the production schedule (PS).

9. A scheduling method comprising:
a production schedule acquisition step of acquiring a production schedule (PS) for each of one or more manufacturing processes in which a plurality of pieces of production plan information (12) for a product including one or more parts are arranged; and
a reorganization step of reorganizing the production schedule (PS) acquired for each of the one or more manufacturing processes, wherein
the reorganization step includes:
an available work time determination step of determining whether there is an available work time in the production schedule (PS);
a production plan information (12) identification step of, when there is the available work time, identifying the production plan information (12) that can be rearranged to the available work time from among the plurality of pieces of production plan information (12) arranged in the production schedule (PS); and
a rearrangement step of rearranging the identified production plan information (12), to the available work time, causing another available work time wherein
the production plan information (12) includes a process lead time for each of the one or more manufacturing processes of the product and a scheduled work date and a work completion date for each of the one or more manufacturing processes of the product, and the production plan information (12) identification step includes:
an excess determination step of determining whether there is excessive production plan information (12) not falling within a daily load amount of the one or more manufacturing processes; and
an excess identification step of, when there is the excessive production plan information (12), identifying the excessive production plan information (12) that can be rearranged to the another available work time, a rearrangement step of rearranging the identified excessive production plan information to the another available work time.

10. A scheduling program (142) configured to cause a scheduling device (100) to execute:
a production schedule acquisition process of acquiring a production schedule (PS) for each of one or more manufacturing processes in which a plurality of pieces of production plan information (12) for a product including one or more parts are arranged; and
a reorganization process of reorganizing the production schedule (PS) acquired for each of the one or more manufacturing processes, wherein
the reorganization process includes:
an available work time determination process of determining whether there is an available work time in the production schedule (PS);
a production plan information (12) identification process of, when there is the available work time, identifying the production plan information (12) that can be rearranged to the available work time from among the plurality of pieces of production plan information (12) arranged in the production schedule (PS); and
a rearrangement process of rearranging the identified production plan information (12), to the available work time, causing another available work time wherein the production plan information (12) includes a process lead time for each of the one or more manufacturing processes of the product and a scheduled work date and a work completion date for each of the one or more manufacturing processes of the product, and the production plan information (12) identification process includes:
an excess determination process of determining whether there is excessive production plan information (12) not falling within a daily load amount of the one or more manufacturing processes; and
an excess identification process of, when there is the excessive production plan information (12), identifying the excessive production plan information (12) that can be rearranged to the another available work time, a rearrangement process of rearranging the identified excessive production plan information to the another available work time.

## Patentansprüche

1. Planungsvorrichtung (100), die konfiguriert ist zum Ausführen:
eines Produktionsplan-Erhaltungsprozesses zum Erhalten eines Produktionsplans (Production Schedule bzw. PS) für jeden eines oder mehrerer Herstellungsprozesse, in dem eine Vielzahl von Produktionsplaninformationen (12) für ein Produkt mit einem oder mehreren darin enthaltenen Teilen angeordnet sind, und
eines Umorganisationsprozesses zum Umorganisieren des für jeden des einen oder der mehreren Herstellungsprozesse erhaltenen Produktionsplans (PS),
wobei der Umorganisationsprozess umfasst:
einen Verfügbare-Arbeitszeit-Bestimmungsprozess zum Bestimmen, ob eine verfügbare Arbeitszeit in dem Produktionsplan (PS) vorhanden ist,
einen Produktionsplaninformationen (12)-Identifizierungsprozess zum, wenn eine verfügbare Arbeitszeit vorhanden ist, Identifizieren der Produktionsplaninformationen (12), die zu der verfügbaren Arbeitszeit umgeordnet werden können, innerhalb der Vielzahl von in dem Produktionsplan (PS) angeordneten Produktionsplaninformationen (12), und
einen Umordnungsprozess zum Umordnen der identifizierten Produktionsplaninformationen (12) zu der verfügbaren Arbeitszeit, wodurch eine andere verfügbare Arbeitszeit vorgesehen wird, wobei die Produktionsplaninformationen (12) eine Prozessvorlaufzeit für jeden des einen oder der mehreren Herstellungsprozesse des Produkts sowie ein geplantes Arbeitsdatum und ein Arbeitsabschlussdatum für jeden des einen oder der mehreren Herstellungsprozesse des Produkts enthalten,
wobei der Produktionsplaninformationen (12)-Identifizierungsprozess umfasst:
einen Übermaßbestimmungsprozess zum Bestimmen, ob übermäßige Produktionsplaninformationen (12), die nicht in eine tägliche Lastgröße des einen oder der mehreren Herstellungsprozesse fallen, vorhanden sind,
einen Übermaßidentifizierungsprozess zum, wenn die übermäßigen Produktionsplaninformationen (12) vorhanden sind, Identifizieren der übermäßigen Produktionsplaninformationen (12), die zu der anderen verfügbaren Arbeitszeit umgeordnet werden können, und
einen Umordnungsprozess zum Umordnen der identifizierten übermäßigen Produktionsplaninformationen zu der anderen verfügbaren Arbeitszeit.

2. Planungsvorrichtung (100) nach Anspruch 1, wobei der Produktionsplaninformationen (12)-Identifizierungsprozess einen Vorrückungs-Identifizierungsprozess zum Identifizieren der Produktionsplaninformationen (12), die durch ein Vorrücken zu der verfügbaren Arbeitszeit umgeordnet werden können, enthält.

3. Planungsvorrichtung (100) nach Anspruch 1 oder 2, wobei die Planungsvorrichtung (100) derart konfiguriert ist, dass sie befähigt ist zum Ausführen eines Verarbeitungsergebnis-Erhaltungsprozesses zum Erhalten eines Verarbeitungsergebnisses für jeden des einen oder der mehreren Verarbeitungsprozesse, und
der Produktionsplaninformationen (12)-Identifizierungsprozess enthält:
einen Verzögerungsbestimmungsprozess zum Bestimmen, ob verzögerte Produktionsplaninformationen (12), die von dem Produktionsplan (PS) verzögert sind, vorhanden sind, basierend auf dem erhaltenen Verarbeitungsergebnis, und
einen Verzögerungsidentifizierungsprozess zum, wenn verzögerte Produktionsplaninformationen (12) vorhanden sind, Identifizieren der verzögerten Produktionsplaninformationen (12), die zu der verfügbaren Arbeitszeit umgeordnet werden können.

4. Planungsvorrichtung (100) nach Anspruch 1 oder 2, wobei die Planungsvorrichtung (100) derart konfiguriert ist, dass sie befähigt ist zum Ausführen eines Zusätzliche-Produktionsplaninformationen (12)-Erhaltungsprozesses zum Erhalten von zusätzlich erzeugten zusätzlichen Produktionsplaninformationen (12), und
der Umordnungsprozess enthält:
einen Zusätzliche-Produktionsplaninformationen (12)-Identifizierungsprozess zum, wenn eine verfügbare Arbeitszeit vorhanden ist, Identifizieren der zusätzlichen Produktionsplaninformationen (12), die zu der verfügbaren Arbeitszeit angeordnet werden können, aus den erhaltenen zusätzlichen Produktionsplaninformationen (12), und
einen zusätzlichen Anordnungsprozess zum Anordnen der identifizierten zusätzlichen Produktionsplaninformationen (12).

5. Planungsvorrichtung (100) nach Anspruch 1 oder 2, wobei die Planungsvorrichtung (100) derart konfiguriert ist, dass sie befähigt ist zum Gruppieren der Vielzahl von in dem Produktionsplan (PS) angeordneten Produktionsplaninformationen (12) unter einer vorbestimmten Bedingung und zum Umordnen der Vielzahl von Produktionsplaninformationen (12) in Einheiten von Gruppen, die durch das Gruppieren erhalten wurden.

6. Planungsvorrichtung (100) nach Anspruch 1 oder 2, die weiterhin eine Defekterhaltungseinrichtung (150) umfasst, die befähigt ist zum Erhalten eines Defekts in einer Verarbeitungsmaschine (70), die in einem des einen oder der mehreren Herstellungsprozesse verwendet wird,
wobei die Planungsvorrichtung (100) konfiguriert ist zum, wenn die Defekterhaltungseinrichtung (150) den Defekt erhält, Ausschließen des Produktionsplans (PS) für den einen des einen oder der mehreren Herstellungsprozesse unter Verwendung der Verarbeitungsmaschine (70), in welcher der Defekt aufgetreten ist, aus dem Umorganisationsprozess.

7. Planungsvorrichtung (100) nach Anspruch 1 oder 2, die weiterhin eine Anwesenheitsinformationen-Erhaltungseinrichtung (160) umfasst, die befähigt ist zum Erhalten von Anwesenheitsinformationen des für jeden des einen oder der mehreren Herstellungsprozesse verantwortlichen Personals,
wobei die Planungsvorrichtung (100) derart konfiguriert ist, dass sie die Produktionsplaninformationen (12) nicht zu einem Datum und einer Uhrzeit umordnet, zu denen das verantwortliche Personal basierend auf den Anwesenheitsinformationen unzureichend ist.

8. Planungsvorrichtung (100) nach Anspruch 1 oder 2, wobei die Planungsvorrichtung (100) derart konfiguriert ist, dass sie befähigt ist zum Teilen einer der Produktionsplaninformationen (12) in eine Vielzahl von Produktionsplaninformationen (12) und zum Umordnen der Vielzahl von Produktionsplaninformationen (12) in dem Produktionsplan (PS).

9. Planungsverfahren, umfassend:
einen Produktionsplan-Erhaltungsschritt zum Erhalten eines Produktionsplans (PS) für jeden eines oder mehrerer Herstellungsprozesse, in dem eine Vielzahl von Produktionsplaninformationen (12) für ein Produkt mit einem oder mehreren darin enthaltenen Teilen angeordnet sind, und
einen Umorganisationsschritt zum Umorganisieren des für jeden des einen oder der mehreren Herstellungsprozesse erhaltenen Produktionsplans (PS),
wobei der Umorganisationsschritt umfasst:
einen Verfügbare-Arbeitszeit-Bestimmungsschritt zum Bestimmen, ob eine verfügbare Arbeitszeit in dem Produktionsplan (PS) vorhanden ist,
einen Produktionsplaninformationen (12)-Identifizierungsschritt zum, wenn eine verfügbare Arbeitszeit vorhanden ist, Identifizieren der Produktionsplaninformationen (12), die zu der verfügbaren Arbeitszeit umgeordnet werden können, innerhalb der Vielzahl von in dem Produktionsplan (PS) angeordneten Produktionsplaninformationen (12), und
einen Umordnungsschritt zum Umordnen der identifizierten Produktionsplaninformationen (12) zu der verfügbaren Arbeitszeit, wodurch eine andere verfügbare Arbeitszeit vorgesehen wird, wobei die Produktionsplaninformationen (12) eine Prozessvorlaufzeit für jeden des einen oder der mehreren Herstellungsprozesse des Produkts sowie ein geplantes Arbeitsdatum und ein Arbeitsabschlussdatum für jeden des einen oder der mehreren Herstellungsprozesse des Produkts enthalten,
wobei der Produktionsplaninformationen (12)-Identifizierungsschritt umfasst:
einen Übermaßbestimmungsschritt zum Bestimmen, ob übermäßige Produktionsplaninformationen (12), die nicht in eine tägliche Lastgröße des einen oder der mehreren Herstellungsprozesse fallen, vorhanden sind,
einen Übermaßidentifizierungsschritt zum, wenn die übermäßigen Produktionsplaninformationen (12) vorhanden sind, Identifizieren der übermäßigen Produktionsplaninformationen (12), die zu der anderen verfügbaren Arbeitszeit umgeordnet werden können, und
einen Umordnungsschritt zum Umordnen der identifizierten übermäßigen Produktionsplaninformationen zu der anderen verfügbaren Arbeitszeit.

10. Planungsprogramm (142), das konfiguriert ist zum Veranlassen einer Planungsvorrichtung (100) zum Ausführen:
eines Produktionsplan-Erhaltungsprozesses zum Erhalten eines Produktionsplans (Production Schedule bzw. PS) für jeden eines oder mehrerer Herstellungsprozesse, in dem eine Vielzahl von Produktionsplaninformationen (12) für ein Produkt mit einem oder mehreren darin enthaltenen Teilen angeordnet sind, und
eines Umorganisationsprozesses zum Umorganisieren des für jeden des einen oder der mehreren Herstellungsprozesse erhaltenen Produktionsplans (PS),
wobei der Umorganisationsprozess umfasst:
einen Verfügbare-Arbeitszeit-Bestimmungsprozess zum Bestimmen, ob eine verfügbare Arbeitszeit in dem Produktionsplan (PS) vorhanden ist,
einen Produktionsplaninformationen (12)-Identifizierungsprozess zum, wenn eine verfügbare Arbeitszeit vorhanden ist, Identifizieren der Produktionsplaninformationen (12), die zu der verfügbaren Arbeitszeit umgeordnet werden können, innerhalb der Vielzahl von in dem Produktionsplan (PS) angeordneten Produktionsplaninformationen (12), und
einen Umordnungsprozess zum Umordnen der identifizierten Produktionsplaninformationen (12) zu der verfügbaren Arbeitszeit, wodurch eine andere verfügbare Arbeitszeit vorgesehen wird, wobei die Produktionsplaninformationen (12) eine Prozessvorlaufzeit für jeden des einen oder der mehreren Herstellungsprozesse des Produkts sowie ein geplantes Arbeitsdatum und ein Arbeitsabschlussdatum für jeden des einen oder der mehreren Herstellungsprozesse des Produkts enthalten,
wobei der Produktionsplaninformationen (12)-Identifizierungsprozess umfasst:
einen Übermaßbestimmungsprozess zum Bestimmen, ob übermäßige Produktionsplaninformationen (12), die nicht in eine tägliche Lastgröße des einen oder der mehreren Herstellungsprozesse fallen, vorhanden sind,
einen Übermaßidentifizierungsprozess zum, wenn die übermäßigen Produktionsplaninformationen (12) vorhanden sind, Identifizieren der übermäßigen Produktionsplaninformationen (12), die zu der anderen verfügbaren Arbeitszeit umgeordnet werden können, und
einen Umordnungsprozess zum Umordnen der identifizierten übermäßigen Produktionsplaninformationen zu der anderen verfügbaren Arbeitszeit.

## Revendications

1. Dispositif de planification (100) configuré pour exécuter :
un processus d'acquisition de plan de production consistant à acquérir un plan de production (PS) pour chacun d'un ou plusieurs processus de fabrication, dans lequel une pluralité d'éléments d'informations de plan de production (12) pour un produit incluant une ou plusieurs pièces sont agencés ; et
un processus de réorganisation consistant à réorganiser le plan de production (PS) acquis pour chacun des un ou plusieurs processus de fabrication, dans lequel
le processus de réorganisation inclut :
un processus de détermination du temps de travail disponible consistant à déterminer s'il existe un temps de travail disponible dans le plan de production (PS) ;
un processus d'identification des informations de plan de production (12) consistant, lorsqu'il existe un temps de travail disponible, à identifier, parmi la pluralité d'éléments d'informations de plan de production (12) organisés dans le plan de production (PS), les informations de plan de production (12) pouvant être réorganisées pour s'adapter au temps de travail disponible ; et
un processus de réorganisation consistant à réorganiser les informations de plan de production (12) identifiées pour les faire coïncider avec le temps de travail disponible, ce qui crée un autre temps de travail disponible,
dans lequel les informations de plan de production (12) incluent un délai d'exécution pour chacun des un ou plusieurs processus de fabrication du produit, ainsi qu'une date de travail prévue et une date d'achèvement du travail pour chacun des un ou plusieurs processus de fabrication du produit, et le processus d'identification des informations de plan de production (12) inclut :
un processus de détermination des excédents consistant à déterminer s'il existe des informations de plan de production (12) excédentaires ne s'inscrivant pas dans la charge journalière d'un ou plusieurs processus de fabrication ; et
un processus d'identification des excédents consistant, lorsqu'il existe des informations de plan de production (12) excédentaires, à identifier les informations de plan de production (12) excédentaires pouvant être réorganisées à un autre temps de travail disponible, ainsi qu'un processus de réorganisation consistant à réorganiser les informations de plan de production excédentaires identifiées à cet autre temps de travail disponible.

2. Dispositif de planification (100) selon la revendication 1, dans lequel le processus d'identification des informations de plan de production (12) inclut un processus d'identification d'avancement consistant à identifier les informations de plan de production (12) pouvant être réorganisées au temps de travail disponible en étant avancées.

3. Dispositif de planification (100) selon la revendication 1 ou 2, dans lequel le dispositif de planification (100) est configuré pour pouvoir exécuter un processus d'acquisition de résultats de traitement consistant à acquérir un résultat de traitement pour chacun des un ou plusieurs processus de fabrication, et
le processus d'identification des informations de plan de production (12) inclut :
un processus de détermination des retards consistant à déterminer s'il existe des informations de plan de production (12) en retard par rapport au plan de production (PS) sur la base du résultat de traitement acquis ; et
un processus d'identification de retard consistant, lorsqu'il existe des informations de plan de production (12) en retard, à identifier les informations de plan de production (12) en retard qui peuvent être réorganisées pour s'inscrire dans le temps de travail disponible.

4. Dispositif de planification (100) selon la revendication 1 ou 2, dans lequel le dispositif de planification (100) est configuré pour pouvoir exécuter un processus d'acquisition d'informations de plan de production (12) supplémentaires consistant à acquérir des informations de plan de production (12) supplémentaires créées ultérieurement, et
le processus de réorganisation inclut :
un processus d'identification des informations de plan de production (12) supplémentaires consistant, lorsqu'il existe un temps de travail disponible, à identifier, parmi les informations de plan de production (12) supplémentaires acquises, celles (12) qui peuvent être organisées au temps de travail disponible ; et
un processus d'agencement supplémentaire consistant à organiser les informations de plan de production (12) supplémentaires identifiées.

5. Dispositif de planification (100) selon la revendication 1 ou 2, dans lequel le dispositif de planification (100) est configuré pour pouvoir regrouper la pluralité d'éléments d'informations de plan de production (12) organisés dans le plan de production (PS) selon une condition prédéterminée et réorganiser la pluralité d'éléments d'informations de plan de production (12) par unités de groupes obtenus par regroupement.

6. Dispositif de planification (100) selon la revendication 1 ou 2, comprenant en outre un moyen de détection de défauts (150) capable de détecter un défaut dans une machine de traitement (70) utilisée dans l'un des un ou plusieurs processus de fabrication, dans lequel
le dispositif de planification (100) est configuré pour, lorsque le moyen de détection de défauts (150) détecte le défaut, exclure du processus de réorganisation le plan de production (PS) correspondant à l'un des un ou plusieurs processus de fabrication utilisant la machine de traitement (70) dans laquelle le défaut s'est produit.

7. Dispositif de planification (100) selon la revendication 1 ou 2, comprenant en outre un moyen d'acquisition d'informations de présence (160) capable d'acquérir des informations de présence du personnel en charge de chacun des un ou plusieurs processus de fabrication, dans lequel
le dispositif de planification (100) est configuré de manière à ne pas pouvoir réorganiser les informations de plan de production (12) à une date et une heure où le personnel en charge est insuffisant, sur la base des informations de présence.

8. Dispositif de planification (100) selon la revendication 1 ou 2, dans lequel le dispositif de planification (100) est configuré pour pouvoir diviser l'une des informations de plan de production (12) en une pluralité d'informations de plan de production (12) et réorganiser cette pluralité d'informations de plan de production (12) dans le plan de production (PS).

9. Procédé de planification comprenant :
une étape d'acquisition d'un plan de production consistant à acquérir un plan de production (PS) pour chacun d'un ou plusieurs processus de fabrication dans lesquels une pluralité d'éléments d'informations de plan de production (12) pour un produit incluant une ou plusieurs pièces sont agencés ; et
une étape de réorganisation consistant à réorganiser le plan de production (PS) acquis pour chacun des un ou plusieurs processus de fabrication, dans lequel
l'étape de réorganisation inclut :
une étape de détermination du temps de travail disponible consistant à déterminer s'il existe un temps de travail disponible dans le plan de production (PS) ;
une étape d'identification des informations de plan de production (12) consistant, lorsqu'il existe un temps de travail disponible, à identifier, parmi la pluralité d'éléments d'informations de plan de production (12) organisés dans le plan de production (PS), les informations de plan de production (12) pouvant être réorganisées pour s'adapter au temps de travail disponible ; et
une étape de réorganisation consistant à réorganiser les informations de plan de production (12) identifiées pour les faire coïncider avec le temps de travail disponible, ce qui crée un autre temps de travail disponible
dans lequel les informations de plan de production (12) incluent un délai d'exécution pour chacun des un ou plusieurs processus de fabrication du produit, ainsi qu'une date de travail prévue et une date d'achèvement du travail pour chacun des un ou plusieurs processus de fabrication du produit, et l'étape d'identification des informations de plan de production (12) inclut :
une étape de détermination d'excès consistant à déterminer s'il existe des informations de plan de production (12) excédentaires ne s'inscrivant pas dans la charge journalière d'un ou plusieurs processus de fabrication ; et
une étape d'identification des excès consistant, lorsqu'il existe des informations de plan de production (12) excédentaires, à identifier les informations de plan de production (12) excédentaires pouvant être réorganisées à un autre temps de travail disponible, une étape de réorganisation consistant à réorganiser les informations de plan de production excédentaires identifiées à cet autre temps de travail disponible.

10. Programme de planification (142) configuré pour amener un dispositif de planification (100) à exécuter :
un processus d'acquisition de plan de production consistant à acquérir un plan de production (PS) pour chacun d'un ou plusieurs processus de fabrication, dans lequel une pluralité d'éléments d'informations de plan de production (12) pour un produit incluant une ou plusieurs pièces sont agencés ; et
un processus de réorganisation consistant à réorganiser le plan de production (PS) acquis pour chacun des un ou plusieurs processus de fabrication, dans lequel
le processus de réorganisation inclut :
un processus de détermination du temps de travail disponible consistant à déterminer s'il existe un temps de travail disponible dans le plan de production (PS) ;
un processus d'identification des informations de plan de production (12) consistant, lorsqu'il existe un temps de travail disponible, à identifier, parmi la pluralité d'éléments d'informations de plan de production (12) organisés dans le plan de production (PS), les informations de plan de production (12) pouvant être réorganisées pour s'adapter au temps de travail disponible ; et
un processus de réorganisation consistant à réorganiser les informations de plan de production (12) identifiées pour les faire coïncider avec le temps de travail disponible, ce qui crée un autre temps de travail disponible, dans lequel les informations de plan de production (12) incluent un délai d'exécution pour chacun des un ou plusieurs processus de fabrication du produit, ainsi qu'une date de travail prévue et une date d'achèvement du travail pour chacun des un ou plusieurs processus de fabrication du produit, et
le processus d'identification des informations de plan de production (12) inclut :
un processus de détermination des excès consistant à déterminer s'il existe des informations de plan de production (12) excédentaires ne s'inscrivant pas dans la charge journalière d'un ou plusieurs processus de fabrication ; et :
un processus d'identification des excédents consistant, lorsqu'il existe des informations de plan de production (12) excédentaires, à identifier les informations de plan de production (12) excédentaires pouvant être réorganisées à un autre temps de travail disponible, un processus de réorganisation consistant à réorganiser les informations de plan de production excédentaires identifiées à l'autre temps de travail disponible.
